(19) Europäisches Patentamt / European Patent Office / Office européen des brevets

(11) **EP 1 998 476 A1**

(12) **EUROPEAN PATENT APPLICATION**
published in accordance with Art. 158(3) EPC

(43) Date of publication:
**03.12.2008 Bulletin 2008/49**

(21) Application number: **07707510.9**

(22) Date of filing: **26.01.2007**

(51) Int Cl.:
*H04B 11/00* (2006.01)   *H04B 7/06* (2006.01)
*H04J 1/00* (2006.01)   *H04J 11/00* (2006.01)
*H04J 15/00* (2006.01)   *H04R 3/00* (2006.01)

(86) International application number:
**PCT/JP2007/051278**

(87) International publication number:
**WO 2007/097157 (30.08.2007 Gazette 2007/35)**

(84) Designated Contracting States:
**DE GB**

(30) Priority: **22.02.2006 JP 2006045591**

(71) Applicant: **NTT DoCoMo, Inc.**
**Chiyoda-ku**
**Tokyo 100-6150 (JP)**

(72) Inventor: **MATSUOKA, Hosei**
**c/o Intellectual Property Department**
**Chiyoda-ku**
**Tokyo 1006150 (JP)**

(74) Representative: **Viering, Jentschura & Partner**
**Grillparzerstrasse 14**
**81675 München (DE)**

(54) **ACOUSTIC SIGNAL TRANSMISSION SYSTEM, MODULATION DEVICE, DEMODULATION DEVICE, AND ACOUSTIC SIGNAL TRANSMISSION METHOD**

(57)   An acoustic signal transmission system of the present invention is a system for transmitting information via sound waves, and has a modulation device, a plurality of speakers, a microphone and a demodulation device. The modulation device generates transmission acoustic signals by encoding transmission signals based on a transmission diversity method and allocating the encoded transmission signals to a plurality of transmission paths. The plurality of speakers output the transmission acoustic signals as sound waves respectively based on the allocation. The microphone receives the sound waves which are output from the plurality of speakers, and outputs received acoustic signals. The demodulation device decodes the received acoustic signals based on the transmission diversity method by using a transfer function of the each sound wave from the plurality of speakers to the microphone.

*Fig.1*

**Description**

Technical Field

A present invention relates to an acoustic signal transmission system, a modulation device, a demodulation device and an acoustic signal transmission method.

Background Art

As a communication technology to transmit information via acoustic waves, a method of using ultrasonic waves and a method of using audible sound waves are known. An advantage of using ultrasonic waves is that individuals experience no uncomfortable influence during transmission, since ultrasonic waves cannot be recognized by the human auditory sense. Also ultrasonic waves can be applied to small area communication because of its sharp directivity.

An advantage of using audible sound waves is that commercial audio equipment can be used as a communication device. Many commercial audio equipment can record and reproduce audible sound waves, but cannot handle ultrasonic waves. Also sound waves are absorbed and attenuated due to the viscosity of the medium. This absorption and attenuation increases in proportion to the frequency. This means that the attenuation, with respect to distance, is smaller in audible sound waves than in ultrasonic waves, and communication distance can be increased by using the audible sound waves.

An example of the technology for performing communication using audible sound waves is a method of transmitting transmission signals by spreading the spectrum based on the frequency masking threshold of voice or music (see Patent Document 1).

"Patent Document 1" is International Publication WO02/45286 pamphlet.

Disclosure of the Invention

Problem to be Solved by the Invention

However, if transmission signals generated by the technology disclosed in Patent Document 1 is input to audio equipment for stereo reproduction or for surround-sound reproduction, the same transmission signals are output from a plurality of speakers. The transmission signals which are output from the plurality of speakers mutually interfere, and frequency-selected fading is generated. As a result, reception errors will occur more frequently.

With the foregoing in view, it is an object of the present invention to provide an acoustic signal transmission system, a modulation device, a demodulation device and an acoustic signal transmission method where the occurrence of reception errors is suppressed.

Means for Solving the Problem

An acoustic signal transmission system of the present invention is a system for transmitting information via sound waves, comprising: a modulation device that generates a plurality of transmission acoustic signals by encoding transmission signals based on a transmission diversity method and allocating the encoded transmission signals to a plurality of transmission paths; a plurality of speakers that output the plurality of transmission acoustic signals as sound waves respectively based on the allocation; a microphone that receives the sound waves which are output from the plurality of speakers and outputs received acoustic signals; and a demodulation device that decodes the received acoustic signals based on the transmission diversity method by using a transfer function of the each sound wave from each of the plurality of speakers to the microphone.

An acoustic signal transmission method of the present invention is a method for transmitting information via sound waves, comprising: a modulation step wherein a modulation device generates a plurality of transmission acoustic signals, by encoding transmission signals based on a transmission diversity method and allocating the encoded transmission signals to a plurality of transmission paths; an output step wherein a plurality of speakers output said plurality of transmission acoustic signals as sound waves respectively based on said allocation; a reception step wherein a microphone receives the sound waves which are output from said plurality of speakers and outputs received acoustic signals; and a demodulation step wherein a demodulation device decodes the received acoustic signals based on the transmission diversity method by using a transfer function of the each sound wave from each of said plurality of speakers to said microphone.

According to the present invention, the modulation device allocates the transmission acoustic signals to the transmission paths, the plurality of speakers outputs the allocated transmission acoustic signals respectively as sound waves, and the demodulation device decodes the sound waves by using the transfer function of each sound wave from each of the plurality of speakers to the microphone. Therefore, even if frequency-selected fading is generated, transmission signals can be decoded with suppressing the occurrence of reception errors by using each of the transfer functions. Also according to the present invention, the modulation device encodes the transmission signals based on the transmission diversity method, and allocates the encoded transmission signals to the plurality of transmission paths, and the demodulation device decodes the transmission signals based on the transmission diversity method. Therefore the spread of space and frequency delays can be effectively handled. In other words, reception errors can be effectively suppressed.

A modulation device of the present invention comprises: encoding means for generating a plurality of encoded transmission signals by encoding transmission signals based on spatial frequency encoding and allocating the encoded transmission signals to a plurality of transmission paths; and modulation means for generating a plurality of transmission acoustic signals by modulating sub-carriers in an audible sound band based on OFDM by using the allocated encoded transmission signals respectively, and allocating the modulated sub-carriers to the plurality of transmission paths.

A demodulation device of the present invention comprises: demodulation means for generating encoded received signals by demodulating received acoustic signals, which are output from a plurality of speakers and received by a microphone, based on OFDM; and decoding means for decoding the encoded received signals based on spatial frequency decoding, by using a transfer function of the each sound wave from each of the plurality of speakers to the microphone.

According to the present invention, the modulation device generates the encoded transmission signals by allocating the transmission signals to the plurality of transmission paths, and the demodulation device decodes the encoded received signals based on the spatial frequency decoding by using the transfer function of the each sound wave from each of the plurality of speakers to the microphone. Therefore, even if frequency-selective fading is generated, transmission signals can be decoded with suppressing the occurrence of reception errors by using each of the transfer functions. Also according to the present invention, the modulation device encodes the transmission signals based on the spatial frequency encoding and allocates the transmission signals to the plurality of transmission paths, and the demodulation device decodes the transmission signals based on the spatial frequency decoding. Therefore, the spread of spatial and frequency delays can be handled more effectively. In other words, reception errors can be effectively suppressed.

An acoustic signal transmission system of the present invention is a system for transmitting information via sound waves, comprising: a modulation device that generates a plurality of transmission acoustic signals by allocating transmission signals to a plurality of transmission paths; a plurality of speakers that output the plurality of transmission acoustic signals as sound waves respectively based on the allocation; a plurality of microphones that receive the sound waves which are output from the plurality of speakers and output received acoustic signals respectively; and a demodulation device that decodes the received acoustic signals by using a transfer function of the each sound wave from each of the plurality of speakers to each of the plurality of microphones.

An acoustic signal transmission method of the present invention is a method for transmitting information via sound waves, comprising: a modulation step wherein a modulation device generates a plurality of transmission acoustic signals by allocating transmission signals to a plurality of transmission paths; an output step wherein a plurality of speakers output said plurality of transmission acoustic signals as sound waves respectively based on said allocation; a reception step wherein a plurality of microphones receive the sound waves which are output from said plurality of speakers, and output received acoustic signals respectively; and a demodulation step wherein a demodulation device decodes said received acoustic signals by using a transfer function of the each sound wave from each of said plurality of speakers to each of said plurality of microphones.

According to the present invention, the modulation device allocates the transmission signals to the plurality of transmission paths, and the plurality of speakers output the allocated transmission acoustic signals respectively as sound waves. Then the plurality of microphones receive the sound waves which are output, and the demodulation device decodes the sound waves by using the transfer function of the each sound wave from each of the plurality of speakers to each of the plurality of microphones. Therefore, even if frequency-selected fading is generated, transmission signals can be decoded with suppressing the occurrence of reception errors by using each of the transfer functions. Also sound waves are received by the plurality of microphones, so the occurrence of reception errors can be more effectively suppressed.

It is preferable that the modulation device of the acoustic signal transmission system comprises allocation means for allocating the transmission signals to the frequency of each sub-carrier which is transmitted by each of the plurality of transmission paths respectively, based on directional characteristics of the sub-carrier. Thereby transmission signals can be transmitted corresponding to the directional characteristics which differ depending on the frequency of the sub-carrier.

It is preferable that the modulation device of the present invention comprises allocation means for allocating the transmission paths, and modulation means for generating a plurality of transmission acoustic signals by modulating sub-carriers in an audible sound band based on OFDM by using the transmission signals that are encoded, and allocating the modulated sub-carriers to the plurality of transmission paths.

A demodulation device of the present invention comprises: demodulation means for generating encoded received signals by respectively demodulating received acoustic signals, which are output from a plurality of speakers and received respectively by a plurality of microphones, based on OFDM; and decoding means for decoding the encoded received signals by using a transfer function of the each sound wave from each of the plurality of speakers to each of the plurality of microphones.

According to the present invention, in the modulation device, the allocation means allocates the transmission signals to the plurality of transmission paths, and decoding means decodes the received acoustic signals by using the transfer function of the each sound wave from each of the plurality of speakers to each of the plurality of microphones. Therefore even if frequency-selected fading is generated, transmission signals can be decoded with suppressing the occurrence of reception errors by using each of the transfer functions. Also transmission signals are decoded by using the received acoustic signals received by the plurality of microphones, so the occurrence of reception errors can be more effectively suppressed.

It is also preferable that the plurality of transmission paths of the modulation device include a first transmission path and a second transmission path, and the allocation means allocates transmission signals to sub-carriers having a relatively low frequency, out of the sub-carriers that are output by the first transmission path, and allocates the allocated transmission signals to sub-carriers having a relatively high frequency, out of the sub-carriers that are output by the second transmission path.

Thereby transmission signals allocated to a sub-carrier having a high frequency with sharp directivity, which is output by the second transmission path, can be allocated to a sub-carrier having low frequency with wide directivity, which is output by the first transmission path. Therefore even if the sound wave, including transmission signals, is weak because the high frequency sub-carrier is output while deviating from the center of the speaker, a low frequency sub-carrier can be output as a strong sound wave. Hence the transmission signals can be sent with better certainty, and the occurrence of reception errors can be suppressed.

Effect of the Invention

According to the present invention, an acoustic signal transmission system, a modulation device, a demodulation device and an acoustic signal transmission method, where the occurrence of reception errors is suppressed, can be provided.

Brief Description of the Drawings

Fig. 1 is a block diagram depicting an acoustic signal sending system included in an acoustic signal transmission system according to a first embodiment.
Fig. 2 is a block diagram depicting an acoustic signal receiving system included in an acoustic signal transmission system according to the first embodiment.
Fig. 3 is a diagram depicting a configuration of a modulation device according to the first embodiment.
Fig. 4 is a diagram depicting L signal and R signal according to the first embodiment.
Fig. 5 is a diagram depicting a configuration of a demodulation device according to the first embodiment.
Fig. 6 is a flow chart depicting an operation of the acoustic signal sending system according to the first embodiment.
Fig. 7 is a flow chart depicting an operation of the acoustic signal receiving system according to the first embodiment.
Fig. 8 is a block diagram depicting an acoustic signal sending system included in an acoustic signal transmission system according to a second embodiment.
Fig. 9 is a block diagram depicting an acoustic signal receiving system included in an acoustic signal transmission system according to the second embodiment.
Fig. 10 is a diagram depicting a configuration of a modulation device according to the second embodiment.
Fig. 11 is a diagram depicting L signal and R signal according to the second embodiment.
Fig. 12 is a diagram depicting a configuration of a demodulation device according to the second embodiment.
Fig. 13 is a flow chart depicting an operation of the acoustic signal sending system according to the second embodiment.
Fig. 14 is a flow chart depicting an operation of the acoustic signal receiving system according to the second embodiment.
Fig. 15 is a diagram depicting a configuration of a modulation device according to a third embodiment.
Fig. 16 is a diagram depicting L signal and R signal according to the third embodiment.
Fig. 17 is a diagram depicting a configuration of a demodulation device according to the third embodiment.

Description of Reference Symbols

TS1, TS2 are for acoustic signal sending system; RS1, RS2 are for acoustic signal receiving system; 4A - 4C are for demodulation device; 6L, 6R are for speaker; 7 is for sound wave; 8, 8L, 8R are for microphone; 10A - 10C are for demodulation device; 12 is for error correction decoding device; 41A - 41C are for S/P conversion unit; 43L, 43R are for modulation unit; 46 is for guard time signal generation unit; 47 is for frame synchronization signal generation unit; 48 is for D/A conversion unit; 101 is for A/D conversion unit; 102 is for frame synchronization unit; 103 is for guard time removal unit; 104L, 104R are for demodulation unit; 106 is for SFBC decoding unit; 107 is for P/S conversion unit; 109B, 109C are for MIMO decoding unit.

Best Mode for Carrying out the Invention

Best modes for carrying out the invention will now be described with reference to the accompanying drawings. In the description of the drawings, the same composing elements are denoted with the same reference symbols, for which redundant description will be omitted.

(First embodiment)

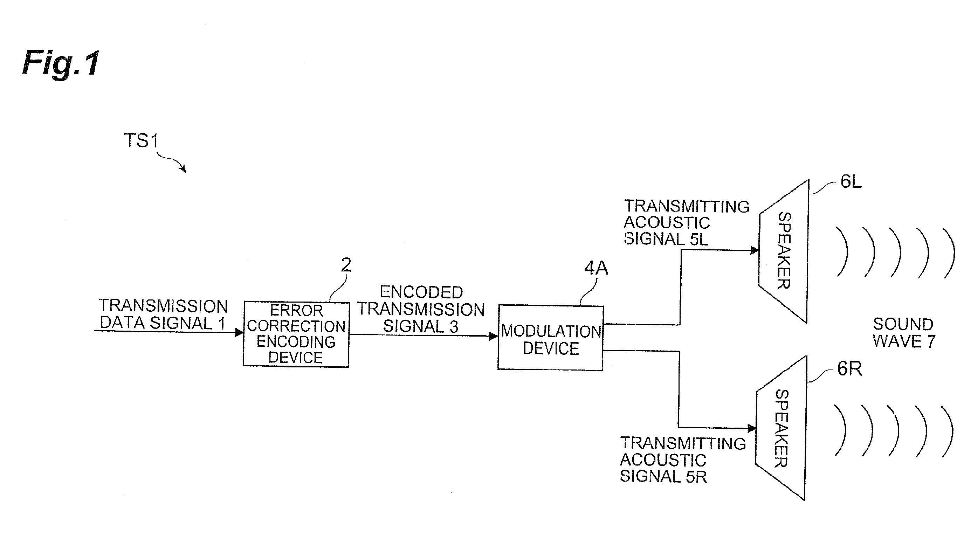

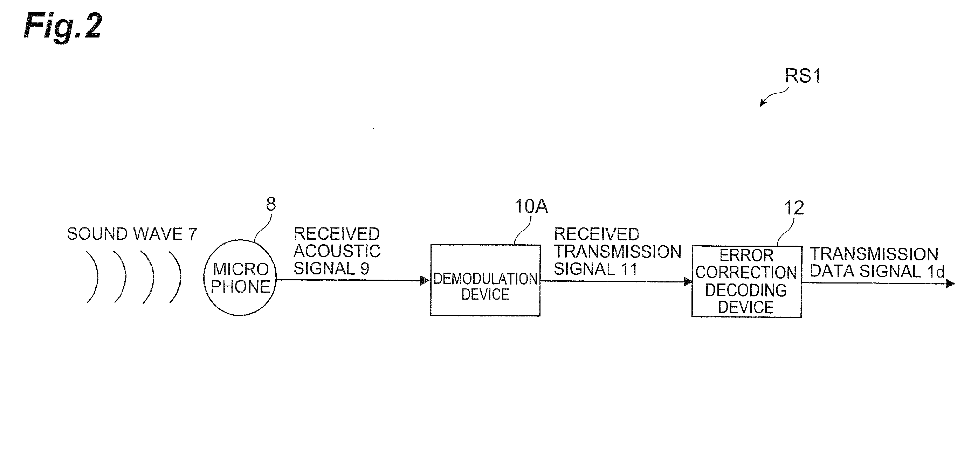

Fig. 1 is a block diagram depicting an acoustic signal sending system included in an acoustic signal transmission system according to a first embodiment. Fig. 2 is a block diagram depicting an acoustic signal receiving system included in the acoustic signal transmission system according to the first embodiment. The acoustic signal transmission system according to the present embodiment includes the acoustic signal sending system TS1 and the acoustic signal receiving system RS 1.

The acoustic signal sending system TS1 is a system that generates transmission acoustic signals 5L and 5R and outputs them as sound waves 7. The acoustic signal sending system TS1 includes an error correction encoding device 2, a modulation device 4A and a plurality of speakers (two speakers in the case of the present embodiment) 6L and 6R.

The error correction encoding device 2 encodes transmission data signals 1 using error correction codes, and outputs encoded transmission signals 3. The modulation device 4A generates the transmission acoustic signals by allocating the encoded transmission signals 3 to the speaker 6L and the speaker 6R and modulating the encoded transmission signals 3. In other words, the modulation device 4A generates the transmission acoustic signal 5L, allocated to the speaker 6L, and the transmission acoustic signal 5R, allocated to the speaker 6R respectively, and outputs them. The speaker 6L outputs the transmission acoustic signal 5L as a sound wave 7. The speaker 6R outputs the transmission acoustic signal 5R as a sound wave 7. The speaker 6L and the speaker 6R constitute a stereo speaker.

The acoustic signal receiving system RS1 1 is a system that receives the sound wave 7 which is output by the acoustic signal sending system TS1, and extracts a transmission data signal 1d. The acoustic signal receiving system RS1 includes one microphone 8, demodulation device 10A and error correction decoding device 12.

The microphone 8 receives the sound wave 7, and outputs the received acoustic signal 9. The demodulation device 10A demodulates the received acoustic signal 9, and generates and outputs a receive transmission signal 11. The error correction decoding device 12 corrects an error of the receive transmission signal 11, and outputs it as a transmission data signal 1d.

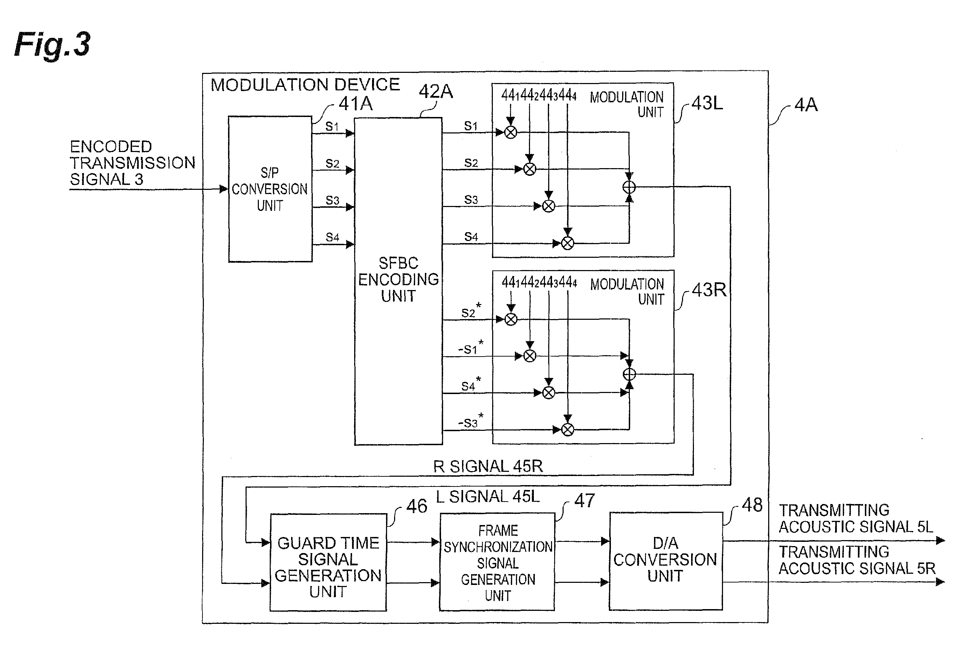

The modulation device 4A and the demodulation device 10A will now be described in detail. Fig. 3 is a diagram depicting a configuration of the modulation device according to the first embodiment. The modulation device 4A includes an S/P conversion unit 41A, an SFBC encoding unit (encoding means) 42A, a modulation unit (modulation means) 43L, a modulation unit 43R, a guard time signal generation unit 46, a frame synchronization signal generation unit 47 and a D/A conversion unit 48.

The S/P conversion unit 41A converts an encoded transmission signal 3 from a single bit stream into a parallel bit stream, and extracts parallel transmission bits $s_1$, $s_2$, $s_3$ and $s_4$. The S/P conversion unit 41A outputs the parallel transmission bits $s_1$, $s_2$, $s_3$ and $s_4$ to the SFBC encoding unit 42A.

The SFBC encoding unit 42A generates transmission signals by encoding the parallel transmission bits $s_1$, $s_2$, $s_3$ and $s_4$ based on the transmission diversity method and allocating the encoded bits to a plurality of transmission paths. Specifically, the SFBC encoding unit 42A encodes the parallel transmission bits $s_1$, $s_2$, $s_3$ and $s_4$ based on spatial frequency encoding, and allocates the two sets of parallel transmission bits ($s_1$, $s_2$, $s_3$, $s_4$) ($s_2^*$, -$s_1^*$, $s_4^*$, -$s_3^*$) to the speaker 6L and the speaker 6R, and outputs these bits.

In the spatial frequency encoding, a plurality of speakers and a plurality of sub-carriers are regarded as one block of encoding. The SFBC encoding unit 42A regards the speaker 6L and speaker 6R and the two sub-carriers of which frequencies are adjacent are regarded as one block of spatial frequency encoding.

In other words, the SFBC encoding unit 42A allocates the parallel transmission bit $s_1$, to the first sub-carrier

**EP 1 998 476 A1**

$44_1$ which is output from the speaker 6L, and allocates the parallel transmission bit $s_2$ to the second sub-carrier $44_2$ which is output from the speaker 6L. The SFBC encoding unit 42A also allocates the parallel transmission bit $s_2^*$ to the first sub-carrier $44_1$ which is output from the speaker 6R, and allocates the parallel transmission bit $-s_1^*$ to the second sub-carrier $44_2$ which is output from the speaker 6R.

In the same manner, the SFBC encoding unit 42A allocates the parallel transmission bit $s_3$ to the third sub-carrier $44_3$ which is output from the speaker 6L, and allocates the parallel transmission bit $s_4$ to the fourth sub-carrier $44_4$ which is output from the speaker 6L. The SFBC encoding unit 42A also allocates the parallel transmission bit $s_4^*$ to the third sub-carrier $44_3$ which is output from the speaker 6R, and allocates the parallel transmission bit $-s_3^*$ to the fourth sub-carrier $44_4$ which is output from the speaker 6R.

In the first to fourth sub-carriers $44_1$ to $44_4$, the frequency is lower in the sequence of the first sub-carrier $44_1$, second sub-carrier $44_2$, third sub-carrier $44_3$ and fourth sub-carrier $44_4$. The parallel transmission bits $s_1$, $s_2$, $s_3$ and $s_4$ are signals which are allocated to the speaker 6L, and the parallel transmission bits $s_2^*$, $-s_1^*$, $s_4^*$ and $-s_3^*$ are signals which are allocated to the speaker 6R. The SFBC encoding unit 42A allocates the parallel transmission bits $s_1$, $s_2$, $s_3$ and $s_4$ to the first to fourth sub-carriers $44_1$ to $44_4$ respectively, and outputs them to the modulation unit 43L, and allocates the parallel transmission bits $s_2^*$, $-s_1^*$, $s_4^*$ and $-s_3^*$ to the first to fourth sub-carriers $44_1$ to $44_4$ respectively, and outputs them to the modulation unit 43R.

The modulation unit 43L modulates the first to fourth sub-carriers $44_1$ to $44_4$ with the corresponding parallel transmission bits $s_1$, $s_2$, $s_3$ and $s_4$ respectively, based on OFDM (Orthogonal Frequency Division Multiplex). The modulation unit 43L outputs a signal generated by the modulation, to the guard time signal generation unit 46 as L signal 45L.

The modulation unit 43R modulates the first to fourth sub-carriers $44_1$ to $44_4$ with the corresponding parallel transmission bits $s_2^*$, $-s_1^*$, $s_4^*$ and $-s_3^*$ respectively, based on OFDM. The modulation unit 43R outputs a signal, which is generated by the modulation, to the guard time signal generation unit 46 as R signal 45R.

The guard time signal generation unit 46 copies the back block of the signal, and generates a guard time signal respectively for the L signal 45L and the R signal 45R. The guard time signal generation unit 46 links the generated guard time signals to the front of the L signal 45L and the R signal 45R respectively. Thereby multi-path interference, such as reflected waves, during transmitting a transmission signal can be handled. The guard time signal generation unit 46 outputs the L signal 45L and the R signal 45R, to which the guard time signal has been added, to the frame synchronization signal generation unit 47.

The frame synchronization signal generation unit 47 generates a frame synchronization signal, and adds the frame synchronization signal to both the L signal 45L and the R signal 45R. The frame synchronization signal is a signal for the receiving side to specify the location of the guard time signal included in the L signal 45L and the R signal 45R respectively. Specifically, the frame synchronization signal is a PN (Pseudo Noise) signal modulated with M series codes. The frame synchronization signal generation unit 47 also adds a pilot signal to both the L signal 45L and the R signal 45R, in order to distinguish the L signal 45L from the R signal 45R. The frame synchronization signal generation unit 47 outputs the L signal 45L and the R signal 45R, to which the frame synchronization signal has been added, to the D/A conversion unit 48.

The D/A conversion unit 48 generates a transmission acoustic signal 5L by converting the L signal 45L into analog, and generates a transmission acoustic signal 5R by converting the R signal 45R into analog. The D/A conversion unit 48 then outputs the generated transmission acoustic signal 5L to the speaker 6L, and outputs the transmission acoustic signal 5R to the speaker 6R.

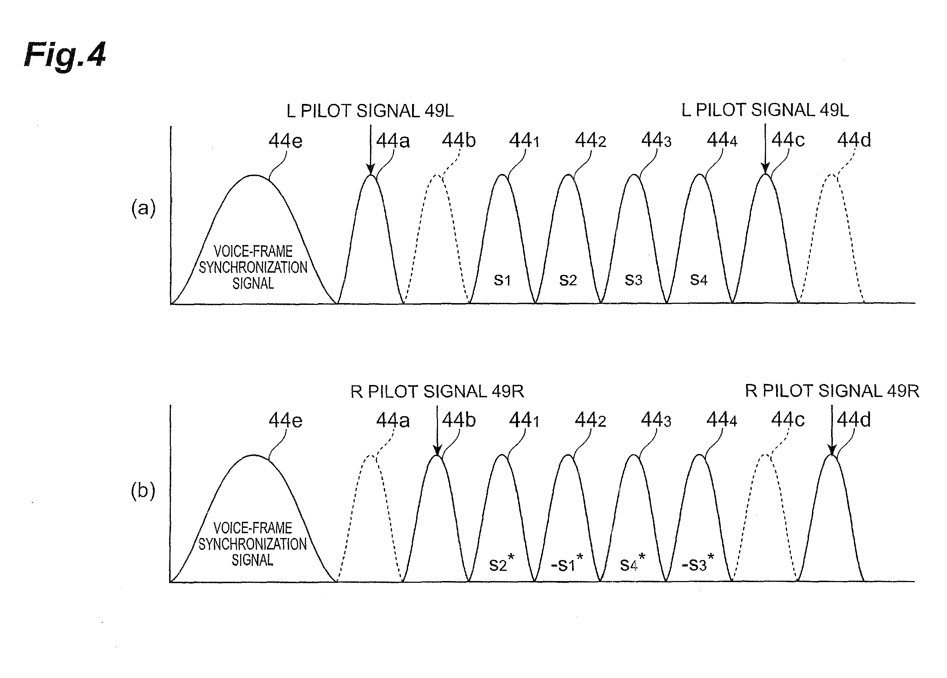

Fig. 4 are diagrams depicting the transmission acoustic signal according to the first embodiment. (a) of Fig. 4 is a diagram depicting the transmission acoustic signal 5L. (b) of Fig. 4 is a diagram depicting the transmission acoustic signal 5R.

As (a) of Fig. 4 shows, the parallel transmission bit $s_1$ is allocated to the first sub-carrier $44_1$, the parallel transmission bit $s_2$ is allocated to the second sub-carrier $44_2$, the parallel transmission bit $s_3$ is allocated to the third sub-carrier $44_3$, and the parallel transmission bit $s_4$ is allocated to the fourth sub-carrier $44_4$ of the transmission acoustic signal 5L.

In the transmission acoustic signal 5L, an L pilot signal for 49L, which indicates that this signal is the transmission acoustic signal 5L, is allocated to sub-carriers 44a and 44c having a frequency different from the first to fourth sub-carriers $44_1$ to $44_4$. In the transmission acoustic signal 5L, sub-carriers 44b and 44d, having a frequency different from the first to fourth sub-carriers $44_1$ to $44_4$ and sub-carriers 44a and 44c, are not used. In the transmission acoustic signal 5L, voice and a frame synchronization signal are disposed in a frequency band which is different from the first to fourth sub-carriers $44_1$ to $44_4$ and 44a to 44d.

As (b) of Fig. 4 shows, the parallel transmission bit $s_2^*$ is allocated to the first sub-carrier $44_1$, the parallel transmission bit $-s_1^*$ is allocated to the second sub-carrier $44_2$, the parallel transmission bit $s_4^*$ is allocated to the third sub-carrier $44_3$, and the parallel transmission bit $-s_3^*$ is allocated to the fourth sub-carrier $44_4$ of the transmission acoustic signal 5R.

In the transmission acoustic signal 5R, an R pilot signal for 49R, which indicates that this signal is the transmission acoustic signal 5R, is allocated to the sub-carriers 44b and 44d. In the transmission acoustic signal 5L, the sub-carriers 44a and 44c are not used. In the transmission acoustic signal 5R, voice and a frame synchronization signal are disposed in a frequency band which is different from the first to fourth sub-carriers $44_1$ to $44_4$ and 44a to 44d.

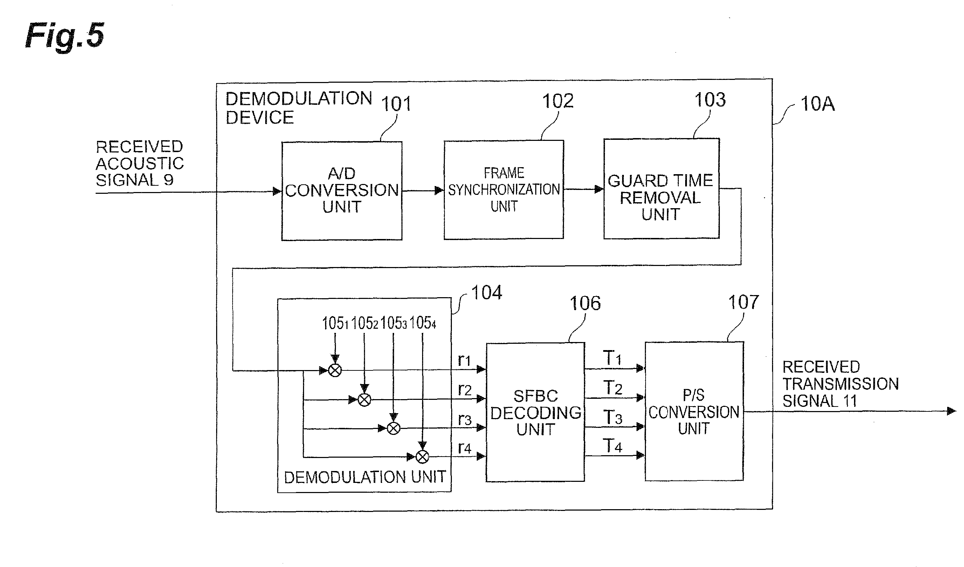

Fig. 5 is a diagram depicting a configuration of the demodulation device according to the first embodiment. The demodulation device 10A according to the present embodiment includes an A/D conversion unit 101, a frame synchronization unit 102, a guard signal removal unit 103, a demodulation unit (demodulation means) 104, an SFBC decoding unit (decoding means) 106 and a P/S conversion unit 107.

The A/D conversion unit 101 samples a received acoustic signal 9, which is output from the microphone 8, and converts it into a digital signal. The A/D conversion unit 101 outputs the digital signal to the frame synchronization unit 102.

The frame synchronization unit 102 divides the input digital signal into frame units. More specifically, the frame synchronization unit 102 correlates the input digital signal with a PN signal, which is modulated with M series codes, while shifting one sample or several samples at a time, and recognizes a point at which the correlation value is highest as a frame synchronization point, and divides the digital signal into frame units based on this frame synchronization point. The frame synchronization unit 102 outputs the digital signal to the guard time removal unit 103 for each divided frame.

The guard time removal unit 103 removes a guard time signal from the digital signals for each divided frame so as to extract the signal frame. The guard time removal unit 103 outputs the extracted signal frame to the demodulation unit 104.

The demodulation unit 104 demodulates the signal frame by the first to fourth sub-carriers $105_1$ to $105_4$ based on OFDM, and extracts the parallel received bits $r_1$, $r_2$, $r_3$ and $r_4$. In the first to fourth sub-carriers $105_1$ to $105_4$, the frequency is lower in the sequence of the first sub-carrier $105_1$, second sub-carrier $105_2$, third sub-carrier $105_3$ and fourth sub-carrier $105_4$. The demodulation unit 104 extracts the parallel received bit $r_1$ by the first sub-carrier $105_1$, extracts the parallel received bit $r_2$ by the second sub-carrier $105_2$, extracts the parallel received bit $r_3$ by the third sub-carrier $105_3$, and extracts the parallel received bit $r_4$ by the fourth sub-carrier $105_4$.

The demodulation unit 104 also demodulates the sub-carrier of the pilot signal included in the signal frame based on OFDM, and extracts an L pilot signal or an R pilot signal. Thereby it can be identified whether the parallel received bit $r_1$, $r_2$, $r_3$ or $r_4$ of each signal frame is a signal output from the speaker 6L or a signal output from the speaker 6R. The demodulation unit 104 outputs the parallel received bits $r_1$, $r_2$, $r_3$ and $r_4$ extracted from the signal frame including the L pilot signal, and the parallel received bits $r_1$, $r_2$, $r_3$ and $r_4$ extracted from the signal frame including the R pilot signal, to the SFBC decoding unit 106 such that identification is possible.

The SFBC decoding unit 106 decodes the signal frames based on the transmission diversity method using a transfer function when the sound wave is transmitted from each speaker 6L and 6R to the microphone 8. In other words, the SFBC decoding unit 106 extracts parallel transmission bits $T_1$, $T_2$, $T_3$ and $T_4$ by decoding the parallel received bits $r_1$, $r_2$, $r_3$ and $r_4$ based on SFBC (Space-Frequency Block Coding) using the transfer function from the speaker 6L to the microphone 8 and the transfer function from the speaker 6R to the microphone 8.

The SFBC decoding unit 106 calculates the transfer function $h_{L12}$ from the speaker 6L to the microphone 8 using the first and second sub-carriers $105_1$ and $105_2$ of the parallel received bit pair $(r_1, r_2)$ extracted from the signal frame that includes the L pilot signal. The SFBC decoding unit 106 also calculates the transfer function $h_{L34}$ from the speaker 6L to the microphone 8 using the third and fourth sub-carriers $105_3$ and $105_4$ of the parallel received bit pair $(r_3, r_4)$ extracted from the signal frame that includes the L pilot signal.

The SFBC decoding unit 106 calculates the transfer function $h_{R12}$ from the speaker 6R to the microphone 8 using the first and second sub-carriers $105_1$ and $105_2$ of the parallel received bit pair $(r_1, r_2)$ extracted from the signal frame that includes the R pilot signal. The SFBC decoding unit 106 also calculates the transfer function $h_{R34}$ from the speaker 6R to the microphone 8 using the third and fourth sub-carriers $105_3$ and $105_4$ of the parallel received bit pair $(r_3, r_4)$ extracted from the signal frame that includes the R pilot signal.

Using the calculated transfer functions $h_{L12}$, $h_{L34}$, $h_{R12}$ and $h_{R34}$, the SFBC decoding unit 106 calculate the parallel transmission bits $T_1$, $T_2$, $T_3$ and $T_4$ as the following Formulas (1).

[Formulas 1]

$$T_1 = h^*_{L12} r_1 - h_{R12} r^*_2$$
$$T_2 = h^*_{L12} r_2 + h_{R12} r^*_1$$
$$T_3 = h^*_{L34} r_3 - h_{R34} r^*_4$$
$$T_4 = h^*_{L34} r + h_{R34} r^*_3$$

$$\cdots \quad (1)$$

The SFBC decoding unit 106 outputs the calculated parallel transmission bits $T_1$, $T_2$, $T_3$ and $T_4$ to the P/S conversion unit 107.

The P/S conversion unit 107 converts the parallel transmission bits $T_1$, $T_2$, $T_3$ and $T_4$ into a single transmission bit stream, and outputs it as a receive transmission signal 11.

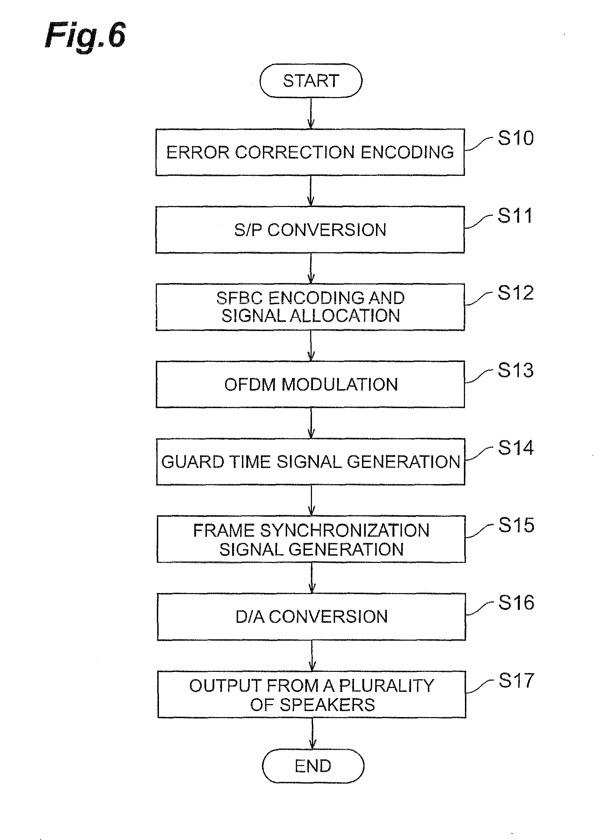

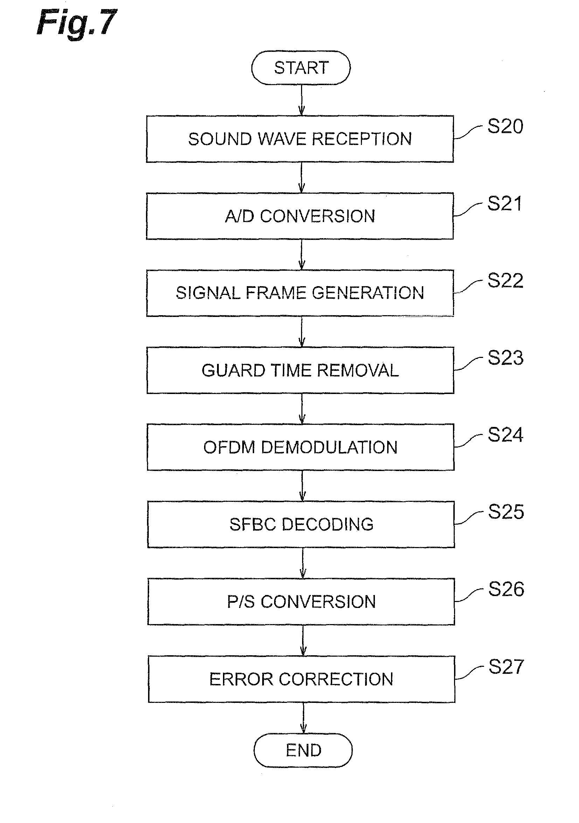

Now the operation of the acoustic signal sending system TS1 including the demodulation device 4A and the operation of the acoustic signal receiving system RS 1 including the modulation device 10A will be described, and the acoustic signal transmission method according to the present embodiment will be described with reference to Fig. 6 and Fig. 7. Fig. 6 is a flow chart depicting the operation of the acoustic signal sending system according to the first embodiment, and Fig. 7 is a flow chart depicting the operation of the acoustic signal receiving system according to the first embodiment.

First the operation of the acoustic signal sending system TS1 will be described with reference to Fig. 6. The transmission data signal 1 is encoded by the error correction encoding device 2 using error correction codes, and the encoded transmission signal 3 is generated (S10). The generated encoded transmission signal 3 is converted into a parallel bit stream by the S/P conversion unit 41A of the modulation device 4A (S11).

The parallel transmission bits $s_1$, $s_2$, $s_3$ and $s_4$ of the parallel bit stream are encoded by the SFBC encoding unit 42A of the modulation device 4A based on the spatial frequency encoding, and each of the two sets of parallel transmission bits $(s_1, s_2, s_3, s_4)$ and $(s_2^*, -s_1^*, s_4^*, -s_3^*)$ are allocated to the speaker 6L and the speaker 6R respectively (S12). For each of the two sets of parallel bits $(s_1, s_2, s_3, s_4)$ and $(s_2^*, -s_1^*, s_4^*, -s_3^*)$, the sub-carriers 44 are modulated by the modulation units 43L and 43R based on OFDM, and the L signal 45L and the R signal 45R are generated respectively (S 13). In other words, in step S12 and step S 13, the transmission signals are encoded based on the transmission diversity method, and are allocated to a plurality of transmission paths (modulation step).

When the L signal 45L and the R signal 45R are generated, the guard time signal is generated by the guard time signal generation unit 46, and is added to the L signal 45L and the R signal 45R respectively (S 14). When the guard time signal is added, the frame synchronization signal is generated by the frame synchronization signal generation unit 47, and is added to the L signal 45L and the R signal 45R respectively (S15). The L signal 45L and the R signal 45R, to which the frame synchronization signal is added, are converted into analog signals respectively by the D/A conversion unit 48, and the transmission acoustic signal 5L and the transmission acoustic signal 5R are generated (S16).

When the transmission acoustic signal 5L and the transmission acoustic signal 5R are generated, the transmission acoustic signal 5L and the transmission acoustic signal 5R are output from the speaker 6L and the speaker 6R respectively as sound waves 7 (S17) (output step). In this way, the sound wave 7 carrying the transmission data signal 1 is output from the two speakers 6L and 6R.

Now the operation of the acoustic signal receiving system RS 1 will be described with reference to Fig. 7. First the sound waves 7 output from the speaker 6L and the speaker 6R are received by the microphone 8, and are output as the received acoustic signal 9 (S20) (receiving step). When the received acoustic signal 9 is output, the received acoustic signal 9 is converted into a digital signal by the A/D conversion unit 101 (S21).

When the received acoustic signal 9 is converted into a digital signal, the received acoustic signal 9 is divided in frame units by the frame synchronization unit 102 (S22). The guard time signal included in the received acoustic signal divided in frame units is removed by the guard time removal unit 103, and a signal frame is extracted (S23).

When the signal frame is extracted, a signal frame signal is demodulated by the demodulation unit 104 based on OFDM, and the parallel received bits $r_1$, $r_2$, $r_3$ and $r_4$ are extracted (S24). When the parallel received bits $r_1$, $r_2$, $r_3$ and $r_4$ are extracted, the parallel received bits $r_1$, $r_2$, $r_3$ and $r_4$ are decoded by the SFBC decoding unit 106 based on SFBC decoding, using the transfer functions $h_{L12}$, $h_{L34}$, $h_{R12}$ and $h_{R34}$, and the parallel transmission bits $T_1$, $T_2$, $T_3$ and $T_4$ are determined (S25) (demodulation step).

When the parallel transmission bits $T_1$, $T_2$, $T_3$ and $T_4$ are determined, the parallel transmission bits $T_1$, $T_2$, $T_3$ and $T_4$ are converted into a signal bit stream by the P/S conversion unit 107, and are output as the receive transmission signal 11 (S26). When the receive transmission signal 11 is output, an error of the receive transmission signal 11 is corrected by the error correction decoding device 12 (S27). In this way, the received sound wave 7 is decoded.

As described above, according to the present embodiment, the SFBC encoding unit 42A of the modulation device 4A encodes the parallel transmission bits based on the spatial frequency encoding, and allocates the parallel transmission bits $(s_1, s_2, s_3, s_4)$ and $(s_2^*, -s_1^*, s_4^*, -s_3^*)$ to the speaker 6L and the speaker 6R. Then the speaker 6L and the speaker 6R output the transmission acoustic signal 5L and the transmission acoustic signal 5R, which include the allocated parallel transmission bits $(s_1, s_2, s_3, s_4)$ and $(s_2^*, -s_1^*, s_4^*, -s_3^*)$ respectively, as the sound waves 7. The SFBC decoding unit 106 of the demodulation device 10A decodes the parallel received bits $r_1$, $r_2$, $r_3$ and $r_4$ based on the spatial frequency decoding by using the transfer functions $h_{L12}$, $h_{L34}$, $h_{R12}$ and $h_{R34}$ of the respective sound wave from the speaker 6L and the speaker 6R to the microphone. Therefore even if frequency-selected fading is generated, the parallel received bits $r_1$, $r_2$, $r_3$ and $r_4$ can be decoded by using the above transfer function while suppressing the occurrence of reception errors.

The present invention is not limited to this embodiment, and various modifications are possible. In the above embodiment, the SFBC encoding unit 42A performs the spatial frequency encoding, and may perform time-space encoding. In the case of time-space encoding, a plurality of speakers and a plurality of time blocks are encoded as one block.

Also in the above embodiment, the sound wave 7 is received by, for example, one microphone 8, but may be received by a plurality of microphones.

(Second embodiment)

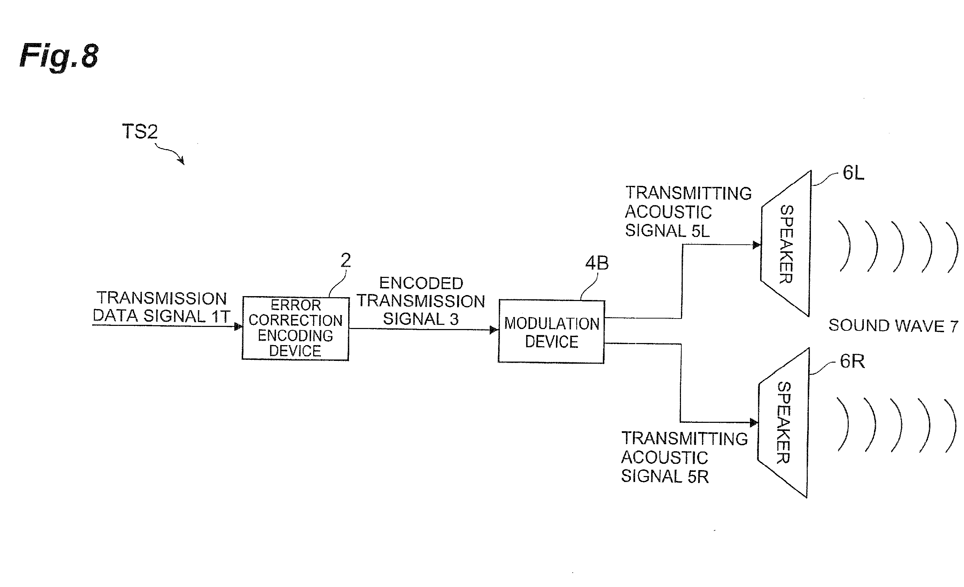

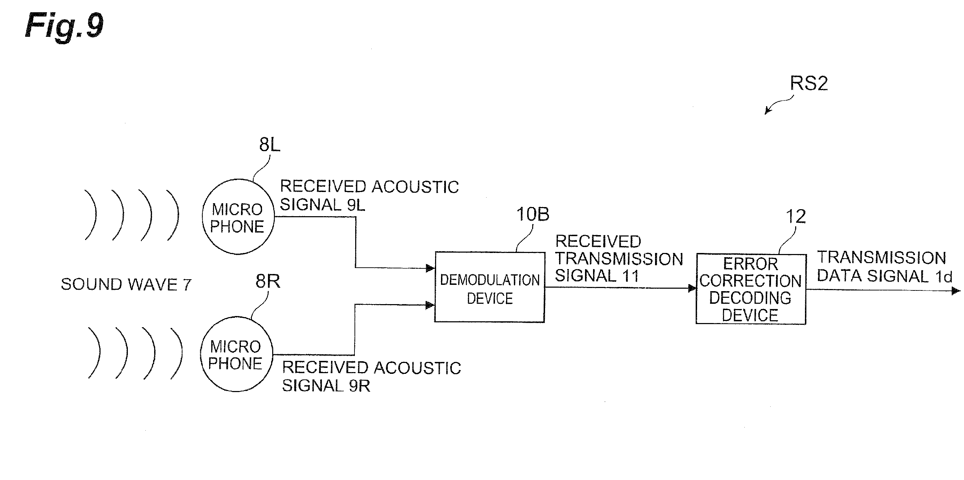

Fig. 8 is a block diagram depicting an acoustic signal sending system included in an acoustic signal transmission system according to a second embodiment. Fig. 9 is a diagram depicting an acoustic signal receiving system included in the acoustic signal transmission system according to the second embodiment. The acoustic signal transmission system according to the present embodiment includes the acoustic signal sending system TS2 and the acoustic signal receiving system RS2.

The acoustic signal sending system TS2 according to the present embodiment has a modulation device 4B, instead of the modulation device 4A included in the acoustic signal sending system TS1 according to the first embodiment.

The acoustic signal receiving system RS2 according to the present embodiment has a plurality of microphones (two microphones in the case of the present embodiment) 8L, 8R, instead of one microphone 8 included in the acoustic signal receiving system RS 1 according to the first embodiment. The microphone 8L receives the sound wave 7, and outputs the received acoustic signal 9L, and the microphone 8R receives the sound wave 7, and outputs the received acoustic signal 9R. The acoustic signal receiving system RS2 also includes a demodulation devices 10B, instead of the demodulation unit 10A which is included in the acoustic signal receiving system RS1 according to the first embodiment. The demodulation device 10A inputs the received acoustic signal 9L and the received acoustic signal 9R, which are output from the microphone 8L and the microphone 8R respectively.

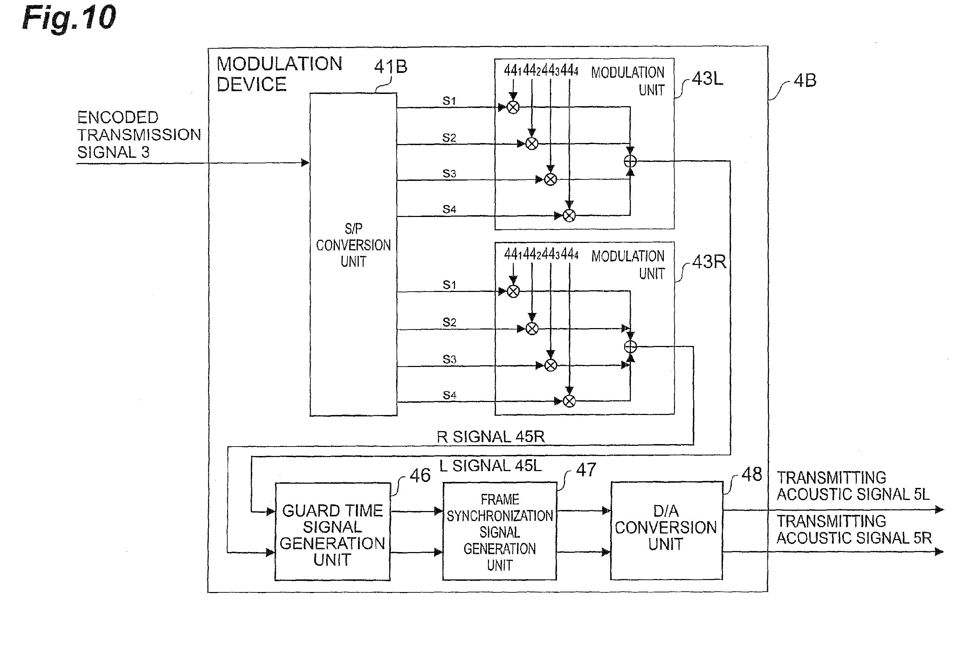

The modulation device 4B and the demodulation device 10B will now be described in detail. Fig. 10 is a diagram depicting a configuration of the modulation device according to the second embodiment. The modulation device 4B includes an S/P conversion unit (allocation means) 41B, a modulation unit (modulation means) 43L, a modulation unit (modulation means) 43R, a guard time signal generation unit 46, a frame synchronization signal generation unit 47 and a D/A conversion unit 48. The guard time signal generation unit 46, the frame synchronization signal generation unit 47 and the D/A conversion unit 48 have functions similar to each corresponding composing element of the above mentioned modulation device 4B according to the first embodiment.

The S/P conversion unit 41B converts an encoded transmission signal 3 which is input, from a single bit stream into a parallel bit stream. The S/P conversion unit 41B divides parallel transmission bits $s_1$, $s_2$, $s_3$, $s_4$, $s_5$, $s_6$, $s_7$ and $s_8$ of the parallel bit stream into two sets of parallel transmission bits $(s_1, s_2, s_3, s_4)$ and $(s_5, s_6, s_7, s_8)$. In other words, the S/P conversion unit 41B allocates the parallel transmission bits $s_1$, $s_2$, $s_3$ and $s_4$ to the speaker 6L, and allocates the parallel transmission bits $s_5$, $s_6$, $s_7$ and $s_8$ to the speaker 6R.

The S/P conversion unit 41B also allocates the parallel transmission bit $s_1$ to the first sub-carrier $44_1$ output from the speaker 6L, allocates the parallel transmission bit $s_2$ to the second sub-carrier $44_2$ output from the speaker 6L, allocates the parallel transmission bit $s_3$ to the third sub-carrier $44_3$ output from the speaker 6L, and allocates the parallel transmission bit $s_4$ to the fourth sub-carrier $44_4$ output from the speaker 6L. Further, the S/P conversion unit 41B outputs the parallel transmission bits $s_1$, $s_2$, $s_3$ and $s_4$ to the modulation unit 43L.

The S/P conversion unit 41B also allocates the parallel transmission bit $s_5$ to the first sub-carrier $44_1$ output from the speaker 6R, allocates the parallel transmission bit $s_6$ to the second sub-carrier $44_2$ output from the speaker 6R, allocates the parallel transmission, bit $s_7$ to the third sub-carrier $44_3$ output from the speaker 6R, and allocates the parallel transmission bit $s_8$ to the fourth sub-carrier $44_4$ output from the speaker 6R. Then the S/P conversion unit 41B outputs the parallel transmission bits $s_5$, $s_6$, $s_7$ and $s_8$ to the modulation unit 43R.

As mentioned above, in the first to fourth sub-carriers $44_1$ to $44_4$, the frequency is lower in the sequence of the

first sub-carrier $44_1$, second sub-carrier $44_2$, third sub-carrier $44_3$ and fourth sub-carrier $44_4$.

The modulation unit 43L modulates the first to fourth sub-carriers $44_1$ to $44_4$ with the corresponding parallel transmission bits $s_1$, $s_2$, $s_3$ and $s_4$ respectively based on OFDM. The modulation unit 43L outputs a signal generated by the modulation, to the guard time signal generation unit 46 as an L signal 45L. The modulation unit 43R modulates the first to fourth sub-carriers $44_1$ to $44_4$ with the corresponding parallel transmission bits $s_5$, $s_6$, $s_7$ and $s_8$ respectively based on OFDM. The modulation unit 43R outputs a signal generated by the modulation, to the guard time signal generation unit 46 as an R signal 45R.

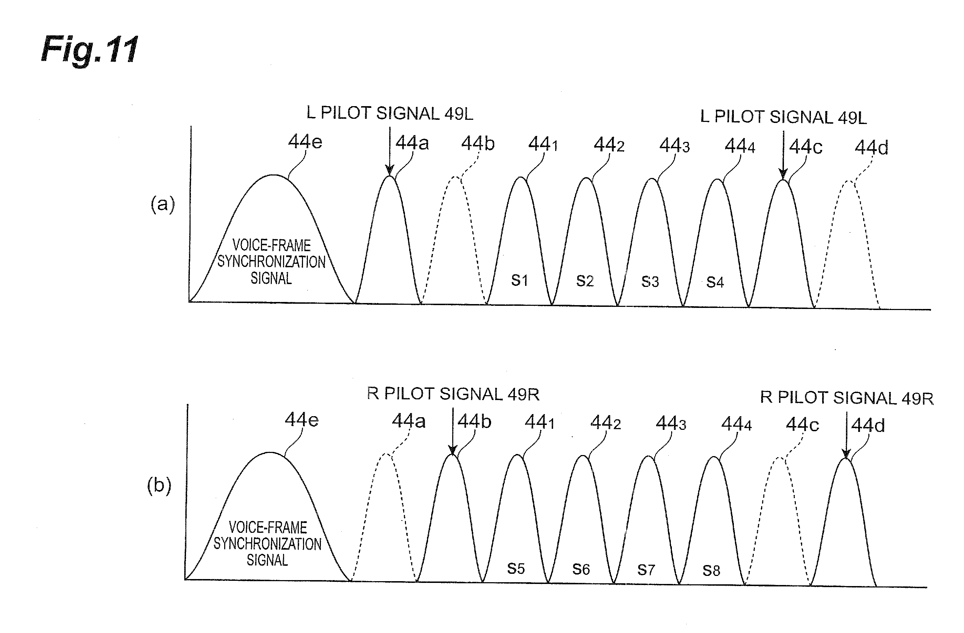

Fig. 11 are diagrams depicting the transmission acoustic signal according to the second embodiment. (a) of Fig. 11 is a diagram depicting the transmission acoustic signal 5L, and (b) of Fig. 11 is a diagram depicting the transmission acoustic signal 5R.

As (a) of Fig. 11 shows, the parallel transmission bit $s_1$ is allocated to the first sub-carrier $44_1$, the parallel transmission bit $s_2$ is allocated to the second sub-carrier $44_2$, the parallel transmission bit $s_3$ is allocated to the third sub-carrier $44_3$, and the parallel transmission bit $s_4$ is allocated to the fourth sub-carrier $44_4$ of the transmission acoustic signal 5L.

In the transmission acoustic signal 5L, an L pilot signal for 49L, which indicates that this signal is the transmission acoustic signal 5L, is allocated to sub-carriers 44a and 44c having a frequency different from the first to fourth sub-carriers $44_1$ to $44_4$. In the transmission acoustic signal 5L, sub-carriers 44b and 44d having a frequency different from the first to fourth sub-carriers $44_1$ to $44_4$ and sub-carriers 44a and 44c, are not used. In the transmission acoustic signal 5L, voice and a frame synchronization signal are disposed in a frequency band which is different from the first to fourth sub-carriers $44_1$ to $44_4$ and 44a to 44d.

As (b) of Fig. 11 shows, the parallel transmission bit $s_5$ is allocated to the first sub-carrier $44_1$, the parallel transmission bit $s_6$ is allocated to the second sub-carrier $44_2$, the parallel transmission bit $s_7$ is allocated to the third sub-carrier $44_3$, and the parallel transmission bit $s_8$ is allocated to the fourth sub-carrier $44_4$ of the transmission acoustic signal 5R.

In the transmission acoustic signal 5R, an R pilot signal for 49R, which indicates that this signal is the transmission acoustic signal 5R, is allocated to the sub-carriers 44b and 44d. In the transmission acoustic signal 5L, the sub-carriers 44a and 44c are not used. In the transmission acoustic signal 5R, voice and a frame synchronization signal are disposed in a frequency band which is different from the first to fourth sub-carriers $44_1$ to $44_4$ and 44a to 44d.

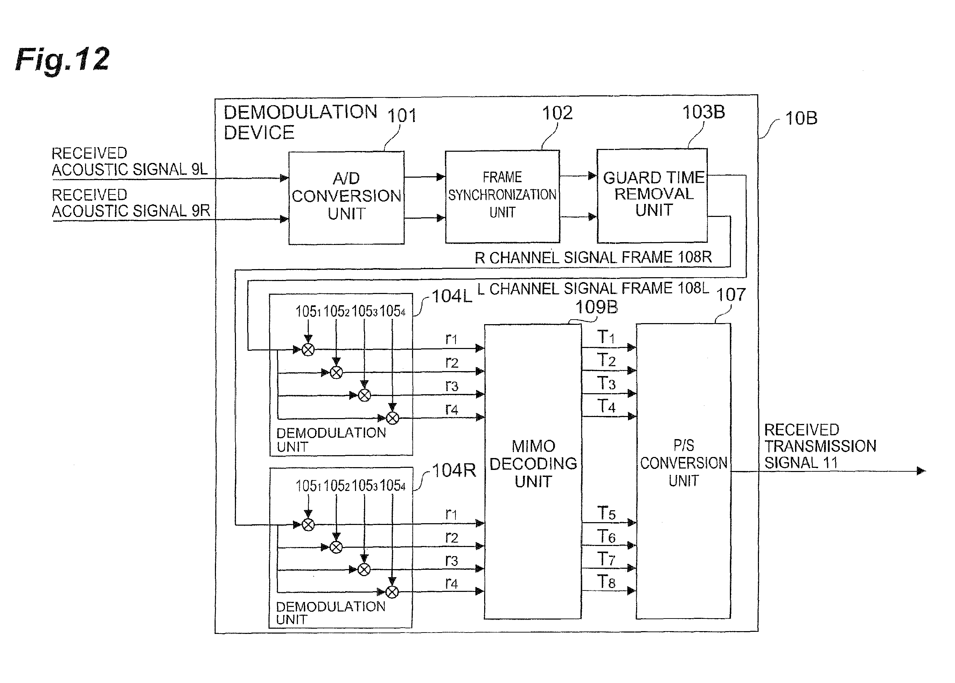

Fig. 12 is a diagram depicting a configuration of the demodulation device according to the second embodiment. The demodulation device 10B includes an A/D conversion unit 101, a frame synchronization unit 102, a guard time removal unit 103, a demodulation unit (demodulation means ) 104L, a demodulation unit (demodulation means) 104R, an MIMO decoding unit (decoding means) 109 and a P/S conversion unit 107.

The A/D conversion unit 101 samples a received acoustic signal 9L and a received acoustic signal 9R, and converts both into digital signals respectively. The A/D conversion unit 101 outputs the received acoustic signal 9L and the received acoustic signal 9R, converted into digital signal, to the frame synchronization unit 102 respectively.

The frame synchronization unit 102 divides the received acoustic signal 9L and the received acoustic signal 9R, converted into digital signals, in frame units respectively so as to generate frame signals. The frame synchronization unit 102 outputs the generated frame signal of the received acoustic signal 9L and the generated frame signal of the received acoustic signal 9R to the guard signal removal unit 103B.

The guard time removal unit 103B removes a guard time signal from the signal frame of the received acoustic signal 9L, so as to extract the L channel signal frame 108L. The guard time removal unit 103B also removes a guard time signal from the signal frame of the received acoustic signal 9R, so as to extract the R channel signal frame 108R. The guard time removal unit 103B outputs the extracted L channel signal frame 108L to the demodulation unit 104L, and outputs the extracted R channel signal frame 108R to the demodulation unit 104R.

The demodulation unit 104L demodulates the L channel signal frame 108L by the first to fourth sub-carriers $105_1$ to $105_4$ based on OFDM, and extracts the parallel received bits $r_1$, $r_2$, $r_3$ and $r_4$. In the first to fourth sub-carriers $105_1$ to $105_4$, the frequency is lower in the sequence of the first sub-carrier $105_1$, second sub-carrier $105_2$, third sub-carrier $105_3$, and fourth sub-carrier $105_4$. The demodulation unit 104L extracts the parallel received bit $r_1$ by the first sub-carrier $105_1$, extracts the parallel received bit $r_2$ by the second sub-carrier $105_2$, extracts the parallel received bit $r_3$ by the third sub-carrier $105_3$, and extracts the parallel received bit $r_4$ by the fourth sub-carrier $105_4$.

The demodulation unit 104L also demodulates the sub-carrier of the pilot signal included in the L channel signal frame 108L based on OFDM, and extracts an L pilot signal for the R pilot signal. Thereby, it can be identified whether the parallel received bits $r_1$, $r_2$, $r_3$ or $r_4$ of each L channel signal frame 108L is a signal output from the speaker 6L or a signal output from the speaker 6R. The demodulation unit 104L outputs the parallel received bits $r_1$, $r_2$, $r_3$ and $r_4$ extracted from the L channel signal frame including the L pilot signal, and the parallel received bits $r_1$, $r_2$, $r_3$ and $r_4$ extracted from the L channel signal frame 108L including the R pilot signal, to the MIMO decoding unit 109B such that identification is possible.

The demodulation unit 104R demodulates the R channel signal frame 108R by the first to fourth sub-carriers

$105_1$ to $105_4$ based on OFDM, and extracts the parallel received bits $r_5$, $r_6$, $r_7$ and $r_8$. The demodulation unit 104R extracts the parallel received bit $r_5$ by the first sub-carrier $105_1$, extracts the parallel received bit $r_6$ by the second sub-carrier $105_2$, extracts the parallel received bit $r_7$ by the third sub-carrier $105_3$, and extracts the parallel received bit $r_8$ by the fourth sub-carrier $105_4$.

The modulation unit 104R also demodulates the sub-carrier of the pilot signal included in the R channel signal frame 108R based on OFDM, and extracts the L pilot signal or the R pilot signal. Thereby it can be identified whether the parallel received bits $r_5$, $r_6$, $r_7$ or $r_8$ of each R channel signal frame 108R is a signal output from the speaker 6L or a signal output from the speaker 6R. The demodulation unit 104R outputs the parallel received bits $r_5$, $r_6$, $r_7$ and $r_8$ extracted from the R channel signal frame 108R including the R pilot signal, and the parallel received bits $r_5$, $r_6$, $r_7$ and $r_8$ extracted from the R channel signal frame 108R including the R pilot signal, to the MIMO decoding unit 109B such that identification is possible.

The MIMO decoding unit 109B decodes the parallel received bits ($r_1$, $r_2$, $r_3$, $r_4$) ($r_5$, $r_6$, $r_7$, $r_8$) based on MIMO (Multiple Input Multiple Output) using a transfer function of the each sound wave from each of the speakers, 6L and 6R, to each of the microphones, 8L and 8R, and extracts the parallel transmission bits ($T_1$, $T_2$, $T_3$, $T_4$, $T_5$, $T_6$, $T_7$, $T_8$).

For example, assume that an ideal transfer function from the speaker 6L to the microphone 8L is $h_{11}$, an ideal transfer function from the speaker 6R to the microphone 8L is $h_{21}$, an ideal transfer function from the speaker 6L to the microphone 8R is $h_{12}$, and an ideal transfer function from the speaker 6R to the microphone 8R is $h_{22}$. Then the relationship of the parallel transmission bit $s_1$ included in the L signal 45L and the parallel transmission bit $s_5$ included in the R signal for 45L, corresponding to the first sub-carrier $44_1$, and the parallel received bit $r_1$, included in the L channel signal frame 108L and the parallel received bit $r_5$ included in the R channel signal frame 108R, corresponding to the first sub-carrier $105_1$ is given by the following Formula (2).

[Formula 2]

$$\begin{pmatrix} r_1 \\ r_5 \end{pmatrix} = \begin{pmatrix} h_{11} & h_{21} \\ h_{12} & h_{22} \end{pmatrix} \begin{pmatrix} s_1 \\ s_5 \end{pmatrix} \quad \circ \quad \circ \quad \circ \quad (2)$$

Therefore the parallel transmission bits $s_1$ and $s_5$ can be calculated by the following Formula (3).

[Formula 3]

$$\begin{pmatrix} s_1 \\ s_5 \end{pmatrix} = \begin{pmatrix} h_{11} & h_{21} \\ h_{12} & h_{22} \end{pmatrix}^{-1} \begin{pmatrix} r_1 \\ r_5 \end{pmatrix} \quad \circ \quad \circ \quad \circ \quad (3)$$

The MIMO decoding unit 109B calculates each transfer function as follows. The MIMO decoding unit 109B calculates the transfer function $h_{LL}$ from the speaker 6L to the microphone 8L using a sub-carrier which is included in the L channel signal frame 108L and to which the L pilot signal for 49L is allocated. The MIMO decoding unit 109B calculates the transfer function $h_{RL}$ from the speaker 6R to the microphone 8L using a sub-carrier which is included in the L channel signal frame 108L and to which the R pilot signal for 49R is allocated.

The MIMO decoding unit 109B calculates a transfer function $h_{LR}$ from the speaker 6L to the microphones 8R using a sub-carrier which is included in the R channel signal frame 108R and to which the L pilot signal for 49L is allocated. The MIMO decoding unit 109B calculates a transfer function $h_{RR}$ from the speaker 6R to the microphone 8R using sub-carriers 44b and 44d which are included in the R channel signal frame 108R and to which the R pilot signal for 49R is allocated.

The MIMO decoding unit 109B calculates the parallel transmission bits $T_1$ and $T_5$ by the following Formula (4), using the calculated transfer functions $h_{LL}$, $h_{RL}$, $h_{LR}$ and $h_{RR}$ and the parallel received bits $r_1$ and $r_5$ corresponding to the first sub-carrier $105_1$.

[Formula 4]

$$\begin{pmatrix} T_1 \\ T_5 \end{pmatrix} = \begin{pmatrix} h_{LL} & h_{RL} \\ h_{LR} & h_{RR} \end{pmatrix}^{-1} \begin{pmatrix} r_1 \\ r_5 \end{pmatrix} \quad \cdot \cdot \cdot (4)$$

In the same manner, the MIMO decoding unit 109B calculates the parallel transmission bits $T_2$ and $T_6$ using the calculated transfer functions $h_{LL}$, $h_{RL}$, $h_{LR}$ and $h_{RR}$ and the parallel received bits $r_2$ and $r_6$ corresponding to the second sub-carrier $105_2$. In the same manner, the MIMO decoding unit 109B calculates the parallel transmission bits $T_3$ and $T_7$ using the calculated transfer functions $h_{LL}$, $h_{RL}$, $h_{LR}$ and $h_{RR}$ and the parallel received bits $r_3$ and $r_7$ corresponding to the third sub-carrier $105_3$. In the same manner, the MIMO decoding unit 109B calculates the parallel transfer bits $T_4$ and $T_8$ using the calculated transfer functions $h_{LL}$, $h_{RL}$, $h_{LR}$ and $h_{RR}$ and the parallel received bits $r_4$ and $r_8$ corresponding to the fourth sub-carrier $105_4$. The MIMO decoding unit 109B outputs the calculated parallel transmission bits ($T_1$, $T_2$, $T_3$, $T_4$, $T_5$, $T_6$, $T_7$, $T_8$) to the P/S conversion unit 107.

The P/S conversion unit 107 converts the parallel transmission bits ($T_1$, $T_2$, $T_3$, $T_4$, $T_5$, $T_6$, $T_7$, $T_8$) into a single bit stream, and outputs it as a receive transmission signal 11.

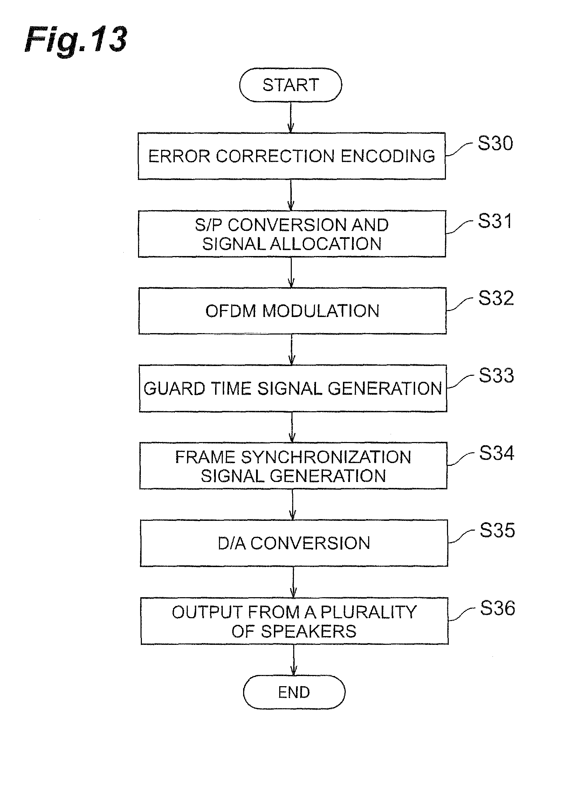

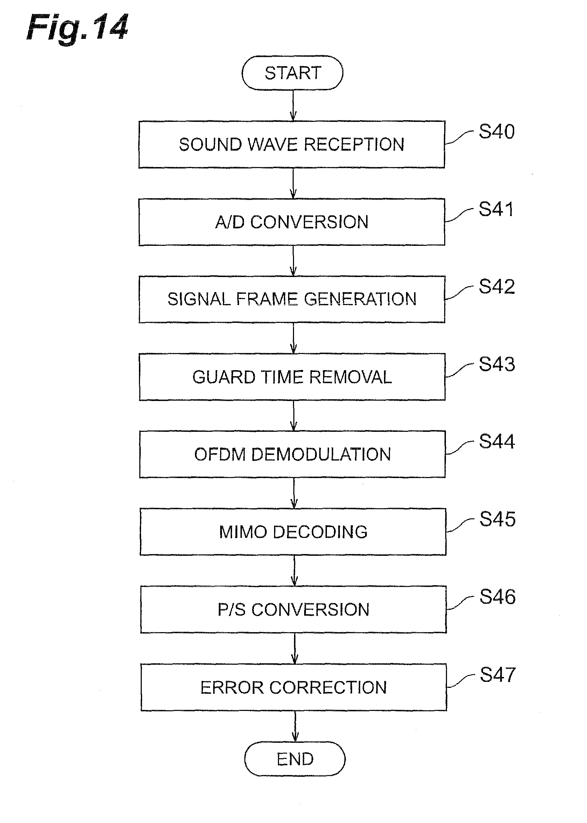

Now the operation of the acoustic signal sending system TS2 including the demodulation device 4B and the operation of the acoustic signal receiving system RS2 including the modulation device 10B will be described, and the acoustic signal transmission method according to the present embodiment will be described with reference to Fig. 13 and Fig. 14. Fig. 13 is a flow chart depicting the operation of the acoustic signal sending system according to the second embodiment. Fig. 14 is a flow chart depicting the operation of the acoustic signal receiving system according to the second embodiment.

First the operation of the acoustic signal sending system TS2 will be described with reference to Fig. 13. The transmission data signal 1 is encoded by the error correction encoding device 2 using error correction codes, and the encoded transmission signal 3 is generated (S30).

The generated encoded transmission signal 3 is converted into a parallel bit stream by the S/P conversion unit 41B of the modulation device 4B, and the parallel transmission bits $s_1$, $s_2$, $s_3$ and $s_4$ are allocated to the speaker 6L, and the parallel transmission bits $s_5$, $s_6$, $s_7$ and $s_8$ are allocated to the speaker 6R (S31). For each of the parallel transmission bits ($s_1$, $s_2$, $s_3$, $s_4$) and ($s_5$, $s_6$, $s_7$, $s_8$) of the parallel bit stream, the first to fourth sub-carriers $44_1$ to $44_4$ are modulated by the modulation units 43L and 43R respectively based on OFDM, and the L signal 45L and the R signal 45R are generated respectively (S32). In other words, in step S31 and step S32, the transmission signals are allocated to a plurality of transmission paths (modulation step).

When the L signal 45L and the R signal 45R are generated, then guard time signal is generated by the guard time signal generation unit 46, and is added to the L signal 45L and the R signal 45R respectively (S33). When the guard time signal is added, the frame synchronization signal is generated by the frame synchronization signal generation unit 47, and is added to the L signal 45L and the R signal 45R respectively (S34). The L signal 45L and the R signal 45R, to which the frame synchronization signal is added, are converted into analog signals respectively by the D/A conversion unit 48, and the transmission acoustic signal 5L and the transmission acoustic signal 5R are generated (S35).

When the transmission acoustic signal 5L and the transmission acoustic signal 5R are generated, the transmission acoustic signal 5L and the transmission acoustic signal 5R are output from the speaker 6L and the speaker 6R respectively as sound waves 7 (S36) (output step). In this way, the sound wave 7 carrying the transmission data signal 1 is output from the two speakers 6L and 6R.

Now the operation of the acoustic signal receiving system RS2 will be described with reference to Fig. 14. First the sound waves 7 output from the speaker 6L and the speaker 6R are received by the microphone 8L and the microphone 8R, and are output as the received acoustic signals 9R and 9L respectively (S40) (reception step). When the received acoustic signals 9R and 9L are output, the received acoustic signals 9R and 9L are converted into digital signals by the A/D conversion unit 101 respectively (S41).

When the received acoustic signals 9R and 9L are converted into digital signals, the received acoustic signals 9R and 9L are divided in frame units respectively by the frame synchronization unit 102 (S42). The guard time signals, which are included in the divided frame signals respectively, are removed by the guard time removal unit 103, and an L channel signal frame 108L and an R channel signal frame 108R are extracted respectively (S43).

When the L channel signal frame 108L and the R channel signal frame 108R are extracted, the L channel signal frame 108L and the R channel signal frame 108R are demodulated by the demodulation unit 104L and the demodulation unit R respectively based on OFDM and the parallel received bits ($r_1$, $r_2$, $r_3$, $r_4$) ($r_5$, $r_6$, $r_7$, $r_8$) are extracted respectively (S44). When the parallel received bits ($r_1$, $r_2$, $r_3$, $r_4$) ($r_5$, $r_6$, $r_7$, $r_8$) are extracted, the parallel received bits ($r_1$,

$r_2$, $r_3$, $r_4$) and ($r_5$, $r_6$, $r_7$, $r_8$) are decoded by the MIMO decoding unit 109 based on MIMO, using the transfer functions $h_{LL}$, $h_{LR}$, $h_{RL}$ and $h_{RR}$, and the parallel transfer bits ($T_1$, $T_2$, $T_3$, $T_4$, $T_5$, $T_6$, $T_7$, $T_8$) are determined (S45). In other words, in step S44 and step S45, the received acoustic signal is decoded using each transfer function $h_{LL}$, $h_{Lk}$, $h_{RL}$ and $h_{RR}$ (demodulation step).

When the parallel transmission bits ($T_1$, $T_2$, $T_3$, $T_4$, $T_5$, $T_6$, $T_7$, $T_8$) are determined, the parallel transmission bits ($T_1$, $T_2$, $T_3$, $T_4$, $T_5$, $T_6$, $T_7$, $T_8$) are converted into a single bit stream by the P/S conversion unit 107, and is output as the receive transmission signal 11 (S46). When the receive transmission signal 11 is output, an error of the receive transmission signal 11 is corrected by the error correction decoding device 12 (S47). In this way, the receive sound wave 7 is decoded.

As described above according to the present embodiment, The S/P conversion unit 41B of the modulation device 4B allocates the parallel transmission bits ($s_1$, $s_2$, $s_3$, $s_4$) and ($s_5$, $s_6$, $s_7$, $s_8$) to the speaker 6L and the speaker 6R. Further, the speaker 6L and the speaker 6R output the allocated transmission acoustic signal 5L and the transmission acoustic signal 5R respectively as sound waves. Then the microphone 8L and the microphone 8R receive the sound waves. Thereafter, the demodulation device 10B decodes the sound waves using the transfer functions $h_{LL}$, $h_{LR}$, $h_{RL}$ and $h_{RR}$ of the respective sound wave from each speaker 6L and 6R to each microphone 8L and 8R. Therefore even if frequency-selected fading is generated, the parallel received bits ($r_1$, $r_2$, $r_3$, $r_4$) and ($r_5$, $r_6$, $r_7$, $r_8$) can be decoded using the above transfer functions $h_{LL}$, $h_{LR}$, $h_{RL}$ and $h_{RR}$, with suppressing the occurrence of reception errors. Also the sound waves are received by a plurality of microphones 8L and 8R, so the occurrence of reception errors can be suppressed more efficiently.

(Third embodiment)

An acoustic signal transmission system according to the present embodiment includes an acoustic signal sending system and an acoustic signal receiving system. The acoustic signal sending system according to the present embodiment has a modulation device 4C, instead of the modulation device 4B included in the acoustic signal sending system TS2 according to the second embodiment. The acoustic signal receiving system according to the present embodiment has a demodulation device 10C instead of the demodulation device 10B included in the acoustic signal receiving system RS2 according to the second embodiment.

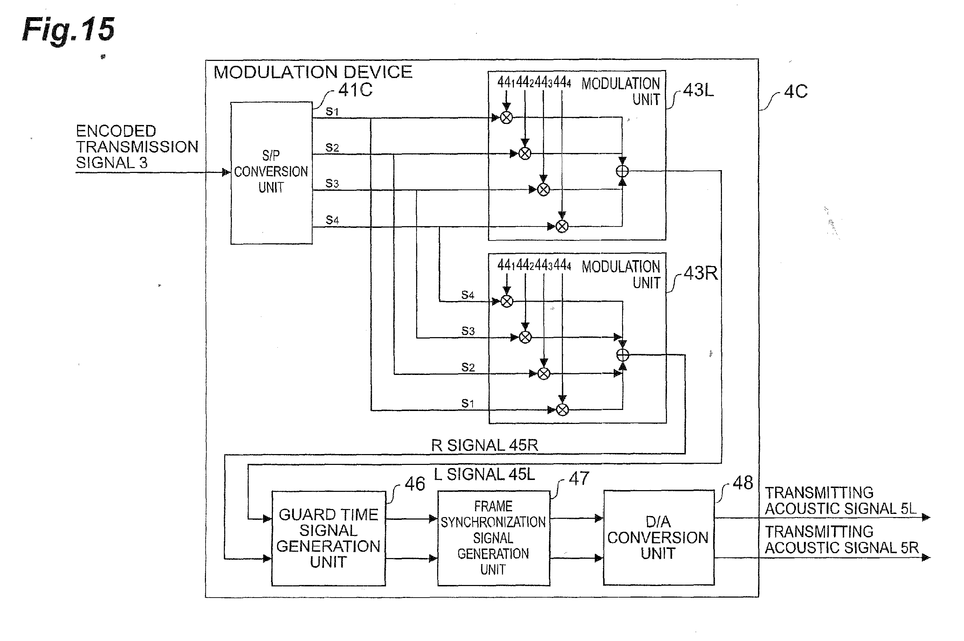

The modulation device 4C and the demodulation device 10C will now be described in detail. Fig. 15 is a diagram depicting a configuration of the modulation device according to the third embodiment. The modulation device 4C includes an S/P conversion unit (allocation means) 41C, a modulation unit (modulation means) 43L, a modulation unit (modulation means) 43R, a guard time signal generation unit 46, a frame synchronization signal generation unit 47 and a D/A conversion unit 48. The guard time signal generation unit 46, the frame synchronization signal generation unit 47, and the D/A conversion unit 48 have functions similar to the corresponding composing elements in the modulation device 4C according to the second embodiment.

The S/P conversion unit 41C converts an encoded transmission signal 3 which is input, from a single bit stream into a parallel bit stream. The S/P conversion unit 41B divides parallel transmission bits $s_1$, $s_2$, $s_3$ and $s_4$ of the parallel bits stream into a speaker 6L and a speaker 6R, which are two transmission paths respectively.

The S/P conversion unit 41C further allocates each of the parallel transmission bits $s_1$, $s_2$, $s_3$ and $s_4$ allocated to the speaker 6L to the first to fourth sub-carriers $44_1$ to $44_4$ which are output from the speaker 6L. In the first to fourth sub-carriers $44_1$ to $44_4$, the frequency is lower in the sequence of the first sub-carrier $44_1$, second sub-carrier $44_2$, third sub-carrier $44_3$ and fourth sub-carrier $44_4$. The S/P conversion unit 41C allocates the parallel transmission bit $s_1$ to the first sub-carrier $44_1$, allocates the parallel transmission bit $s_2$ to the second sub-carrier $44_2$, allocates the parallel transmission bit $s_3$ to the first sub-carrier $44_3$, and allocates the parallel transmission bit $s_4$ to the fourth sub-carrier $44_4$. The S/P conversion unit 41C outputs the parallel transmission bits $s_1$, $s_2$, $s_3$ and $s_4$ allocated in this way to the modulation unit 43L.

The S/P conversion unit 41C also allocates each parallel transmission bit $s_1$, $s_2$, $s_3$ and $s_4$ allocated to the speaker 6R to the first to fourth sub-carriers $44_1$ to $44_4$, which are output from the speaker 6R. The S/P conversion unit 41C allocates the parallel transmission bit $s_1$ to the fourth sub-carrier $44_4$, allocates the parallel transmission bit $s_2$ to the third sub-carrier $44_3$, allocates the parallel transmission bit $s_3$ to the second sub-carrier $44_2$, and allocates the parallel transmission bit $s_4$ to the first sub-carrier $44_1$. The S/P conversion unit 41C outputs the parallel transmission bits $s_1$, $s_2$, $s_3$ and $s_4$ allocated like this to the modulation unit 43R.

The modulation unit 43L modulates the first sub-carrier $44_1$ with the parallel transmission bit $s_1$ based on OFDM, modulates the second sub-carrier $44_2$ with the parallel transmission bit $s_2$ based on OFDM, modulates the third sub-carrier $44_3$ with the parallel transmission bit $s_3$ based on OFDM, and modulates the fourth sub-carrier $44_4$ with the parallel transmission bit $s_4$ based on OFDM. Then the modulation unit 43L outputs the modulated signal to the guard time signal generation unit 46 as an L signal 45L.

The modulation unit 43R modulates the fourth sub-carrier $44_4$ with the parallel transmission bit $s_1$ based on

OFDM, modulates the third sub-carrier $44_3$ with the parallel transmission bit $s_2$ based on OFDM, modulates the second sub-carrier $44_2$ with the parallel transmission bit $s_3$ based on OFDM, and modulates the first sub-carrier $44_1$ with the parallel transmission bit $s_4$ based on OFDM. Then the modulation unit 43R outputs the modulated signal to the guard time signal generation unit 46 as an R signal 45R.

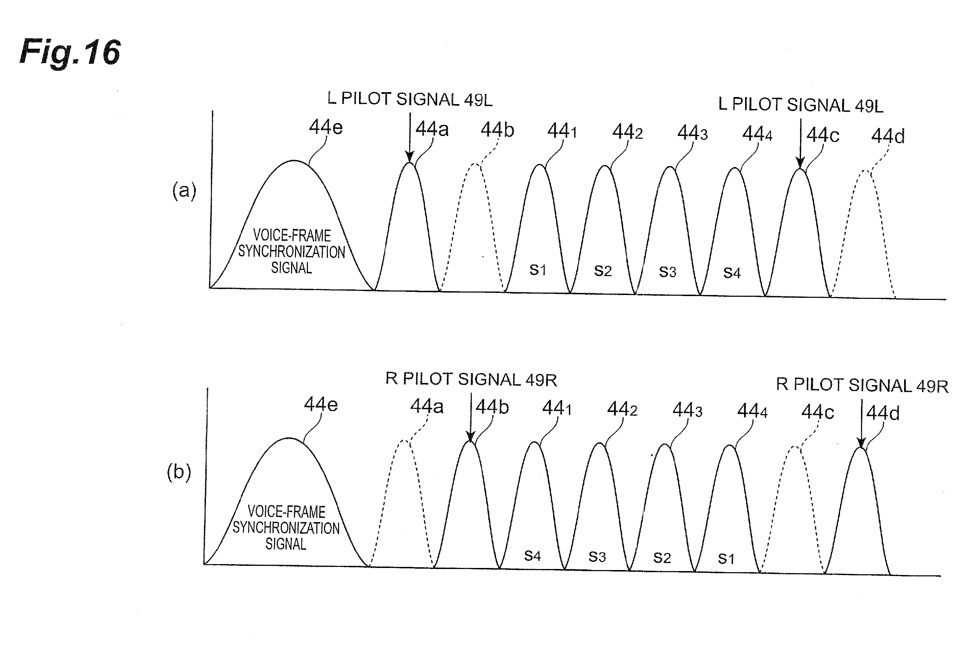

Fig. 16 are diagrams depicting the transmission acoustic signal according to the third embodiment. (a) of Fig. 16 is a diagram depicting the transmission acoustic signal 5L. (b) of Fig. 16 is a diagram depicting the transmission acoustic signal 5R.

The parallel transmission bit $s_1$ is allocated to the first sub-carrier $44_1$ of the transmission acoustic signal 5L, the parallel transmission bit $s_2$ is allocated to the second sub-carrier $44_2$, the parallel transmission bit $s_3$ is allocated to the third sub-carrier $44_3$, and the parallel transmission bit $s_4$ is allocated to the fourth sub-carrier $44_4$. The parallel transmission unit $s_4$ is allocated to the first sub-carrier $44_1$, the parallel transmission bit $s_3$ is allocated to the second sub-carrier $44_2$, the parallel transmission bit $s_2$ is allocated to the third sub-carrier $44_3$, and the parallel transmission bit $s_1$ is allocated to the fourth sub-carrier $44_4$ of the transmission acoustic signal 5R.

In other words, the S/P conversion unit 41C allocates the parallel transmission bit $s_1$ to the first sub-carrier $44_1$ of which frequency is lowest among the first to fourth sub-carriers $44_1$ to $44_4$ which are output by the speaker 6L. The S/P conversion unit 41C allocates the parallel transmission bit $s_1$ to the fourth sub-carrier $44_4$, of which frequency is highest among the first to fourth sub-carriers $44_1$ to $44_4$ which are output by the speaker 6R.

The S/P conversion unit 41C allocates the parallel transmission bit $s_2$ to the second sub-carrier $44_2$ of which frequency is second lowest among the first to fourth sub-carriers $44_1$ to $44_4$ which are output by the speaker 6L. The S/P conversion unit 41C allocates the parallel transmission bit $s_2$ to the third sub-carrier $44_3$ of which frequency is second highest among the first to fourth sub-carriers $44_1$ to $44_4$ which are output by the speaker 6R.

The S/P conversion unit 41C allocates the parallel transmission bit $s_3$ to the third sub-carrier $44_3$ of which frequency is second highest among the first to fourth sub-carriers $44_1$ to $44_4$ which are output by the speaker 6L. The S/P conversion unit 41C allocates the parallel transmission bit $s_3$ to the second sub-carrier $44_2$ of which frequency is second lowest among the first to fourth sub-carriers $44_1$ to $44_4$ which are output by the speaker 6R.

The S/P conversion unit 41C allocates the parallel transmission bit $s_4$ to the fourth sub-carrier $44_4$ of which frequency is the highest among the first to fourth sub-carriers $44_1$ to $44_4$ which are output by the speaker 6L. The S/P conversion unit 41C allocates the parallel transmission bit $s_4$ to the first sub-carrier $44_1$ of which frequency is the lowest among the first to fourth sub-carriers $44_1$ to $44_4$ which are output by the speaker 6R.

Just like the first and second embodiments, in the transmission acoustic signal 5L, an L pilot signal, which indicates that this signal is the transmission acoustic signal 5L, is allocated to the sub-carriers 44a and 44c, which are different from the first to fourth sub-carriers $44_1$ to $44_4$. Also just like the first and second embodiments, in the transmission acoustic signal 5R, an R pilot signal, which indicates that this signal is the transmission acoustic signal 5R, is allocated to the sub-carriers 44b and 44d, which are different from the first to fourth sub-carriers $44_1$ to $44_4$.

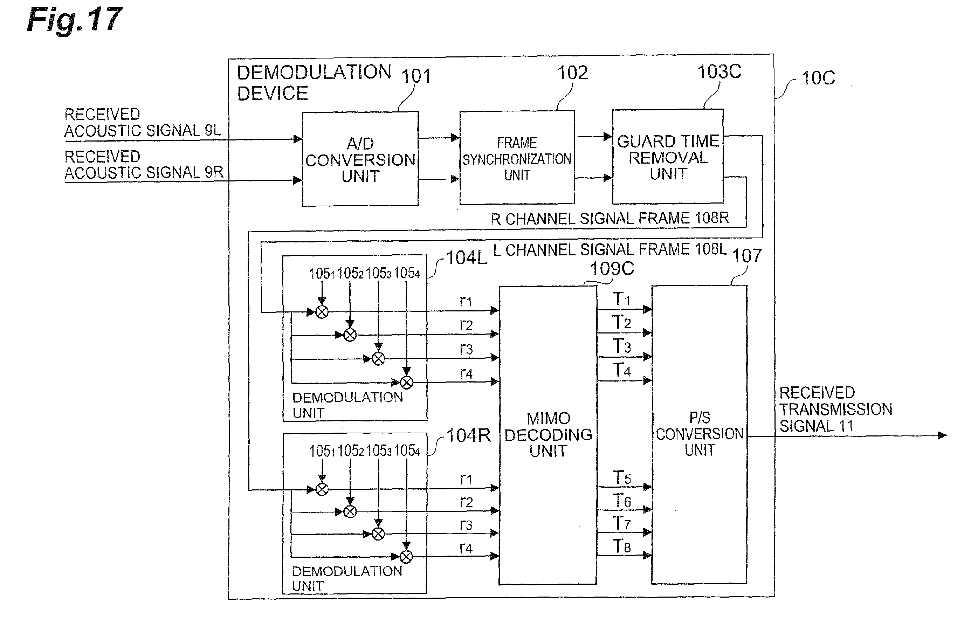

Fig. 17 is a diagram depicting a configuration of the demodulation device according to the third embodiment. The demodulation device 10C includes an A/D conversion unit 101, a frame synchronization unit 102, a guard time removal unit 103, a demodulation unit (demodulation means) 104L, a demodulation unit (demodulation means) 104R, an MIMO decoding unit (decoding means) 109C and a P/S conversion unit 107. The A/D conversion unit 101, the frame synchronization unit 102 and the guard time removal unit 103 have functions similar to the corresponding composing elements of the demodulation device 10C according to the second embodiment.

The demodulation unit 104L demodulates the L channel signal frame 108L with the first sub-carrier $105_1$ based on OFDM, and extracts the parallel received bit $r_1$. The demodulation unit 104L demodulates the L channel signal frame 108L with the second sub-carrier $105_2$ based on OFDM, and extracts the parallel received bit $r_2$. The demodulation unit 104L demodulates the L channel signal frame 108L with the third sub-carrier $105_3$ based on OFDM, and extracts the parallel received bit $r_3$. And the demodulation unit 104L demodulates the L channel signal frame 108L with the first sub-carrier $105_4$ based on OFDM, and extracts the parallel received bit $r_4$.

The demodulation unit 104L demodulates the sub-carrier of the L channel signal frame 108L based on OFDM, and extracts an L pilot signal or an R pilot signal. Thereby it can be identified whether the parallel received bit $r_1$, $r_2$, $r_3$ and $r_4$ of each L channel signal frame 108L is a signal which was output from the speaker 6L or a signal which was output from the speaker 6R. The demodulation unit 104 outputs the parallel received bits $r_1$, $r_2$, $r_3$ and $r_4$, which are extracted from the L channel signal frame 108L that includes the L pilot signal, and the parallel received bits $r_1$, $r_2$, $r_3$ and $r_4$, which are extracted from the R signal frame 108R that includes the R pilot signal, to the MIMO decoding unit 109C respectively.

The modulation unit 104R demodulates the R channel signal frame 108R with the first sub-carrier $105_1$ based on OFDM, and extracts the parallel received bit $r_5$. The modulation unit 104R demodulates the R channel signal frame 108R with the second sub-carrier $105_2$ based on OFDM, and extracts the parallel received bit $r_6$. The modulation unit 104R demodulates the R channel signal frame 108R with the third sub-carrier $105_3$ based on OFDM, and extracts the parallel received bit $r_7$. And the modulation unit 104R demodulates the R channel signal frame 108R with the first sub-

carrier $105_4$ based on OFDM, and extracts the parallel received bit $r_8$.

The demodulation unit 104R also demodulates the sub-carrier of the R channel signal frame 108R based on OFDM, and extracts an L pilot signal or an R pilot signal. Thereby it can be identified whether the parallel received bit $r_5$, $r_6$, $r_7$ or $r_8$ of each R channel signal frame 108R is a signal output from the speaker 6L or a signal output from the speaker 6R. The demodulation unit 104 outputs the parallel received bits $r_5$, $r_6$, $r_7$ and $r_8$ extracted from the L channel signal frame 108L including the L pilot signal and the parallel received bits $r_5$, $r_6$, $r_7$ and $r_8$ extracted from the R channel signal frame 108R including the R pilot signal, to the MIMO decoding unit 109C respectively.

The MIMO decoding unit 109C decodes the parallel received bits $(r_1, r_2, r_3, r_4)$ and $(r_5, r_6, r_7, r_8)$ based on MIME (Multiple Input Multiple Output) using a transfer function of the each sound wave from each of the speakers 6L and 6R and each of the microphones 8L and 8R respectively, and extracts the parallel transmission bits $(T_1, T_2, T_3, T_4)$.

The MIMO decoding unit 109C calculates the transfer functions $h_{LL}$, $h_{LR}$, $h_{RL}$ and $h_{RR}$, as mentioned above. The MIMO decoding unit 109C calculates the parallel transmission bits $T_1$ and $T_4$ by Formula (5) using the calculated transfer functions $h_{LL}$, $h_{LR}$, $h_{RL}$ and $h_{RR}$ and the parallel received bits $r_1$, $r_4$, $r_5$ and $r_8$. The parallel received bits $r_1$ and $r_4$ correspond to the first and fourth sub-carriers $105_1$ and $105_4$ of the L channel signal frame 108L, and the parallel received bits $r_5$ and $r_8$ correspond to the first and fourth sub-carriers $105_1$ and $105_4$ of the R channel signal frame 108R.

[Formula 5]

$$\begin{pmatrix} T_1 \\ T_4 \end{pmatrix} = \begin{pmatrix} h_{LL} & h_{RL} \\ h_{LR} & h_{RR} \end{pmatrix}^{-1} \begin{pmatrix} r_1 \\ r_5 \end{pmatrix} + \begin{pmatrix} h_{LL} & h_{RL} \\ h_{LR} & h_{RR} \end{pmatrix}^{-1} \begin{pmatrix} r_8 \\ r_4 \end{pmatrix} \quad \cdots \quad (5)$$

In the same manner, the MIMO decoding unit 109C calculates the parallel transmission bits $T_2$ and $T_3$ using the transfer functions $h_{LL}$, $h_{LR}$, $h_{RL}$ and $h_{RR}$ and the parallel received bits $r_2$, $r_3$, $r_6$ and $r_7$. The parallel received bits $r_2$ and $r_3$ correspond to the second and third sub-carriers $105_2$ and $105_3$ of the L channel signal frame 108L, and the parallel received bits $r_6$ and $r_7$ correspond to the second and third sub-carriers and $105_3$ of the R channel signal frame 108R. The MIMO decoding unit 109C outputs the calculated parallel transmission bits $(T_1, T_2, T_3, T_4)$ to the P/S conversion unit 107.

The P/S conversion unit 107 converts the parallel transmission bits $(T_1, T_2, T_3, T_4)$ into a single bit stream, and outputs it as a receive transmission signal 11.

Directivity during propagation is sharper as the frequency of the sub-carrier becomes higher, and the directivity during propagation spreads wider as the frequency of the sub-carrier becomes lower. Therefore if the sub-carrier having a high frequency is output deviating from the front face of each speaker 6L and 6R when the transmission acoustic signal 5L and the transmission acoustic signal 5R are output from the speaker 6L and the speaker 6R respectively, the receive power by the microphones 8L and 8R of the sub-carrier with high frequency drops. As a result, reception errors occur due to the drop in receive power by the microphones 8L and 8R.

The S/P conversion unit 41C of the modulation device 4C of the present embodiment allocates the parallel transmission bits $s_3$ and $s_4$ that are allocated to the third and fourth sub-carriers $44_3$ and $44_4$ which are output from the speaker 6L and have sharp directivity and high frequency, and also allocates to the first and second sub-carriers $44_1$ and $44_2$ which are output from the speaker 6R and have wide directivity and low frequency. The S/P conversion unit 41C also allocates the parallel transmission bits $s_1$ and $s_2$, that are allocated to the third and fourth sub-carriers $44_3$ and $44_4$ which are output from the speaker 6R and have a sharp directivity and high frequency, and also allocates to the first and second sub-carriers $44_1$ and $44_2$ which are output from the speaker 6L and have a wide directivity and low frequency.

Hence even if the third and fourth sub-carriers $44_3$ and $44_4$ having a high frequency are output deviating from a front face of the speakers 6L and 6R and sound waves become weak, the first and second sub-carriers $44_1$ and $44_2$ having low frequency can be output as high sound waves, and the parallel transmission bits $s_1$, $s_2$, $s_3$ and $s_4$ can be transmitted with higher certainty, and the occurrence of reception errors can be suppressed. In other words, the parallel transmission bits $s_1$, $s_2$, $s_3$ and $s_4$ can be transmitted according to the directional characteristics, which differs depending on the frequency of the sub-carrier.

**Claims**

1. An acoustic signal transmission system for transmitting information via sound waves, comprising:

a modulation device that generates a plurality of transmission acoustic signals by encoding transmission signals based on a transmission diversity method and allocating the encoded transmission signals to a plurality of transmission paths;
a plurality of speakers that output said plurality of transmission acoustic signals as sound waves respectively based on said allocation;
a microphone that receives the sound waves which are output from said plurality of speakers, and outputs received acoustic signals; and
a demodulation device that decodes the received acoustic signals based on the transmission diversity method by using a transfer function of the each sound wave from each of said plurality of speakers to said microphone.

2. An acoustic signal transmission system for transmitting information via sound waves, comprising:

a modulation device that generates a plurality of transmission acoustic signals by allocating transmission signals to a plurality of transmission paths;
a plurality of speakers that output said plurality of transmission acoustic signals as sound waves respectively based on said allocation;
a plurality of microphones that receive the sound waves which are output from said plurality of speakers and output received acoustic signals respectively; and
a demodulation device that decodes said received acoustic signals by using a transfer function of the each sound wave from each of said plurality of speakers to each of said plurality of microphones.

3. The acoustic signal transmission system according to Claim 2, **characterized in that** said modulation device comprises allocation means for allocating said transmission signals to frequency of each sub-carrier which is transmitted by each of said plurality of transmission paths respectively, based on directional characteristics of the sub-carrier.

4. A modulation device, comprising:

encoding means for generating a plurality of encoded transmission signals by encoding transmission signals based on spatial frequency encoding and allocating the encoded transmission signals to a plurality of transmission paths; and
modulation means for generating a plurality of transmission acoustic signals by modulating sub-carriers in an audible sound band based on OFDM by using said allocated encoded transmission signals respectively, and allocating the modulated sub-carriers to said plurality of transmission paths.

5. A modulation device, comprising:

allocation means for allocating transmission signals to a plurality of transmission paths; and
modulation means for generating a plurality of transmission acoustic signals by modulating sub-carriers in an audible sound band based on OFDM by using said transmission signals that are encoded, and allocating the modulated sub-carriers to said plurality of transmission paths.

6. The modulation device according to Claim 5, **characterized in that**
said plurality of transmission paths include a first transmission path and a second transmission path, and
said allocation means allocates transmission signals to sub-carriers having a relatively low frequency out of sub-carriers that are output by said first transmission path, and allocates said allocated transmission signals to sub-carriers having a relatively high frequency out of sub-carriers that are output by said second transmission path.

7. A demodulation device, comprising:

demodulation means for generating encoded received signals by demodulating received acoustic signals, which are output from a plurality of speakers and received by a microphone, based on OFDM; and
decoding means for decoding said encoded received signals based on special frequency decoding, by using a transfer function of the each sound wave from each of said plurality of speakers to said microphone.

8. A demodulation device, comprising:

demodulation means for generating encoded received signals by respectively demodulating received acoustic signals, which are output from a plurality of speakers and received respectively by a plurality of microphones, based on OFDM; and

decoding means for decoding said encoded received signals by using a transfer function of the each sound wave from each of said plurality of speakers to each of said plurality of microphones.

9. An acoustic signal transmission method for transmitting information via sound waves, comprising:

a modulation step wherein a modulation device generates a plurality of transmission acoustic signals, by encoding transmission signals based on a transmission diversity method and allocating the encoded transmission signals to a plurality of transmission paths;

an output step wherein a plurality of speakers output said plurality of transmission acoustic signals as sound waves respectively based on said allocation;

a reception step wherein a microphone receives the sound waves which are output from said plurality of speakers and outputs received acoustic signals; and

a demodulation step wherein a demodulation device decodes the received acoustic signals based on the transmission diversity method by using a transfer function of the each sound wave from each of said plurality of speakers to said microphone.

10. An acoustic signal transmission method for transmitting information via sound waves, comprising:

a modulation step wherein a modulation device generates a plurality of transmission acoustic signals by allocating transmission signals to a plurality of transmission paths;

an output step wherein a plurality of speakers output said plurality of transmission acoustic signals as sound waves respectively based on said allocation;

a reception step wherein a plurality of microphones receive the sound waves which are output from said plurality of speakers, and output received acoustic signals respectively; and

a demodulation step wherein a demodulation device decodes said received acoustic signals by using a transfer function of the each sound wave from each of said plurality of speakers to each of said plurality of microphones.

## Fig.1

TS1

TRANSMISSION
DATA SIGNAL 1 → ERROR CORRECTION ENCODING DEVICE (2) → ENCODED TRANSMISSION SIGNAL 3 → MODULATION DEVICE (4A)

TRANSMITTING ACOUSTIC SIGNAL 5L → SPEAKER 6L → SOUND WAVE 7

TRANSMITTING ACOUSTIC SIGNAL 5R → SPEAKER 6R

EP 1 998 476 A1

## Fig.2

RS1

SOUND WAVE 7

8
MICRO PHONE

RECEIVED ACOUSTIC SIGNAL 9

10A
DEMODULATION DEVICE

RECEIVED TRANSMISSION SIGNAL 11

12
ERROR CORRECTION DECODING DEVICE

TRANSMISSION DATA SIGNAL 1d

EP 1 998 476 A1

# Fig.3

**MODULATION DEVICE**

ENCODED TRANSMISSION SIGNAL 3 → 41A **S/P CONVERSION UNIT** → S1, S2, S3, S4 → 42A **SFBC ENCODING UNIT**

43L **MODULATION UNIT** — $44_1 44_2 44_3 44_4$ : S1, S2, S3, S4 → ⊕

43R **MODULATION UNIT** — $44_1 44_2 44_3 44_4$ : $S_2{}^{*}$, $-S_1{}^{*}$, $S_4{}^{*}$, $-S_3{}^{*}$ → ⊕

R SIGNAL 45R

L SIGNAL 45L

46 **GUARD TIME SIGNAL GENERATION UNIT** → 47 **FRAME SYNCHRONIZATION SIGNAL GENERATION UNIT** → 48 **D/A CONVERSION UNIT** → TRANSMITTING ACOUSTIC SIGNAL 5L / TRANSMITTING ACOUSTIC SIGNAL 5R

4A

EP 1 998 476 A1

# Fig.4

(a) L PILOT SIGNAL 49L ... L PILOT SIGNAL 49L

44e  44a  44b  44₁  44₂  44₃  44₄  44c  44d

VOICE-FRAME SYNCHRONIZATION SIGNAL    S1  S2  S3  S4

(b) R PILOT SIGNAL 49R ... R PILOT SIGNAL 49R

44e  44a  44b  44₁  44₂  44₃  44₄  44c  44d

VOICE-FRAME SYNCHRONIZATION SIGNAL    $S_2^*$  $-S_1^*$  $S_4^*$  $-S_3^*$

EP 1 998 476 A1

## Fig.5

EP 1 998 476 A1

## Fig.6

```
            ( START )
                |
                v
+------------------------------+  ___ S10
|  ERROR CORRECTION ENCODING   |
+------------------------------+
                |
                v
+------------------------------+  ___ S11
|       S/P CONVERSION         |
+------------------------------+
                |
                v
+------------------------------+  ___ S12
|      SFBC ENCODING AND       |
|      SIGNAL ALLOCATION       |
+------------------------------+
                |
                v
+------------------------------+  ___ S13
|       OFDM MODULATION        |
+------------------------------+
                |
                v
+------------------------------+  ___ S14
|  GUARD TIME SIGNAL GENERATION|
+------------------------------+
                |
                v
+------------------------------+  ___ S15
|     FRAME SYNCHRONIZATION     |
|       SIGNAL GENERATION       |
+------------------------------+
                |
                v
+------------------------------+  ___ S16
|       D/A CONVERSION         |
+------------------------------+
                |
                v
+------------------------------+  ___ S17
|    OUTPUT FROM A PLURALITY    |
|       OF SPEAKERS             |
+------------------------------+
                |
                v
             ( END )
```

# Fig.7

START

| | |
|---|---|
| SOUND WAVE RECEPTION | S20 |
| A/D CONVERSION | S21 |
| SIGNAL FRAME GENERATION | S22 |
| GUARD TIME REMOVAL | S23 |
| OFDM DEMODULATION | S24 |
| SFBC DECODING | S25 |
| P/S CONVERSION | S26 |
| ERROR CORRECTION | S27 |

END

## Fig.8

EP 1 998 476 A1

**Fig.9**

# Fig.10

MODULATION
DEVICE

41B

ENCODED
TRANSMISSION
SIGNAL 3

S/P
CONVERSION
UNIT

$44_1 44_2 44_3 44_4$  MODULATION
UNIT

43L

4B

S1
S2
S3
S4

$44_1 44_2 44_3 44_4$  MODULATION
UNIT

43R

S1
S2
S3
S4

R SIGNAL 45R

L SIGNAL 45L

46

47

48

GUARD TIME
SIGNAL
GENERATION
UNIT

FRAME
SYNCHRONIZATION
SIGNAL
GENERATION
UNIT

D/A
CONVERSION
UNIT

TRANSMITTING
ACOUSTIC SIGNAL 5L

TRANSMITTING
ACOUSTIC SIGNAL 5R

EP 1 998 476 A1

## Fig.11

L PILOT SIGNAL 49L    L PILOT SIGNAL 49L

44e   44a   44b   44₁   44₂   44₃   44₄   44c   44d

(a)

VOICE-FRAME
SYNCHRONIZATION
SIGNAL

S1   S2   S3   S4

R PILOT SIGNAL 49R    R PILOT SIGNAL 49R

44e   44a   44b   44₁   44₂   44₃   44₄   44c   44d

(b)

VOICE-FRAME
SYNCHRONIZATION
SIGNAL

S5   S6   S7   S8

**Fig.12**

EP 1 998 476 A1

# Fig.13

```
                    ( START )
                         │
                         ▼
        ┌─────────────────────────────────┐
        │  ERROR CORRECTION ENCODING      │──── S30
        └─────────────────────────────────┘
                         │
                         ▼
        ┌─────────────────────────────────┐
        │       S/P CONVERSION AND        │──── S31
        │       SIGNAL ALLOCATION         │
        └─────────────────────────────────┘
                         │
                         ▼
        ┌─────────────────────────────────┐
        │       OFDM MODULATION           │──── S32
        └─────────────────────────────────┘
                         │
                         ▼
        ┌─────────────────────────────────┐
        │  GUARD TIME SIGNAL GENERATION   │──── S33
        └─────────────────────────────────┘
                         │
                         ▼
        ┌─────────────────────────────────┐
        │     FRAME SYNCHRONIZATION       │──── S34
        │       SIGNAL GENERATION         │
        └─────────────────────────────────┘
                         │
                         ▼
        ┌─────────────────────────────────┐
        │       D/A CONVERSION            │──── S35
        └─────────────────────────────────┘
                         │
                         ▼
        ┌─────────────────────────────────┐
        │   OUTPUT FROM A PLURALITY       │──── S36
        │       OF SPEAKERS               │
        └─────────────────────────────────┘
                         │
                         ▼
                    ( END )
```

# Fig.14

```
                    ┌─────────┐
                    │  START  │
                    └─────────┘
                         │
                         ▼
        ┌─────────────────────────────────┐
        │     SOUND WAVE RECEPTION         │───── S40
        └─────────────────────────────────┘
                         │
                         ▼
        ┌─────────────────────────────────┐
        │        A/D CONVERSION            │───── S41
        └─────────────────────────────────┘
                         │
                         ▼
        ┌─────────────────────────────────┐
        │    SIGNAL FRAME GENERATION       │───── S42
        └─────────────────────────────────┘
                         │
                         ▼
        ┌─────────────────────────────────┐
        │      GUARD TIME REMOVAL          │───── S43
        └─────────────────────────────────┘
                         │
                         ▼
        ┌─────────────────────────────────┐
        │       OFDM DEMODULATION          │───── S44
        └─────────────────────────────────┘
                         │
                         ▼
        ┌─────────────────────────────────┐
        │         MIMO DECODING            │───── S45
        └─────────────────────────────────┘
                         │
                         ▼
        ┌─────────────────────────────────┐
        │         P/S CONVERSION           │───── S46
        └─────────────────────────────────┘
                         │
                         ▼
        ┌─────────────────────────────────┐
        │       ERROR CORRECTION           │───── S47
        └─────────────────────────────────┘
                         │
                         ▼
                    ┌─────────┐
                    │   END   │
                    └─────────┘
```

## Fig.15

MODULATION DEVICE

41C

S/P CONVERSION UNIT

ENCODED TRANSMISSION SIGNAL 3

S1
S2
S3
S4

$44_1$ $44_2$ $44_3$ $44_4$  MODULATION UNIT

43L

4C

$44_1$ $44_2$ $44_3$ $44_4$  MODULATION UNIT

43R

S4
S3
S2
S1

R SIGNAL 45R

L SIGNAL 45L

46
GUARD TIME SIGNAL GENERATION UNIT

47
FRAME SYNCHRONIZATION SIGNAL GENERATION UNIT

48
D/A CONVERSION UNIT

TRANSMITTING ACOUSTIC SIGNAL 5L

TRANSMITTING ACOUSTIC SIGNAL 5R

## Fig.16

(a)

L PILOT SIGNAL 49L    L PILOT SIGNAL 49L

44e    44a    44b    $44_1$    $44_2$    $44_3$    $44_4$    44c    44d

VOICE-FRAME
SYNCHRONIZATION
SIGNAL

S1    S2    S3    S4

(b)

R PILOT SIGNAL 49R    R PILOT SIGNAL 49R

44e    44a    44b    $44_1$    $44_2$    $44_3$    $44_4$    44c    44d

VOICE-FRAME
SYNCHRONIZATION
SIGNAL

S4    S3    S2    S1

EP 1 998 476 A1

# Fig.17

DEMODULATION DEVICE

RECEIVED ACOUSTIC SIGNAL 9L

RECEIVED ACOUSTIC SIGNAL 9R

A/D CONVERSION UNIT — 101

FRAME SYNCHRONIZATION UNIT — 102

GUARD TIME REMOVAL UNIT — 103C

10C

R CHANNEL SIGNAL FRAME 108R

L CHANNEL SIGNAL FRAME 108L

$105_1$ $105_2$ $105_3$ $105_4$ — 104L

$r_1$ $r_2$ $r_3$ $r_4$

DEMODULATION UNIT

$105_1$ $105_2$ $105_3$ $105_4$ — 104R

$r_1$ $r_2$ $r_3$ $r_4$

DEMODULATION UNIT

MIMO DECODING UNIT — 109C

$T_1$ $T_2$ $T_3$ $T_4$

$T_5$ $T_6$ $T_7$ $T_8$

P/S CONVERSION UNIT — 107

RECEIVED TRANSMISSION SIGNAL 11

EP 1 998 476 A1

34

## INTERNATIONAL SEARCH REPORT

| International application No. |
|---|
| PCT/JP2007/051278 |

A. CLASSIFICATION OF SUBJECT MATTER
*H04B11/00*(2006.01)i, *H04B7/06*(2006.01)i, *H04J1/00*(2006.01)i, *H04J11/00*
(2006.01)i, *H04J15/00*(2006.01)i, *H04R3/00*(2006.01)i

According to International Patent Classification (IPC) or to both national classification and IPC

B. FIELDS SEARCHED

Minimum documentation searched (classification system followed by classification symbols)
H04B11/00, H04B7/06, H04J1/00, H04J11/00, H04J15/00, H04R3/00

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2005-537757 A (ETA SA Manufacture Horlogere Suisse), 08 December, 2005 (08.12.05), Par. Nos. [0017], [0018] & WO 2004/023682 A & EP 1543638 A1 & US 2005/254344 A1 & CN 1663154 A | 1-10 |
| Y | JP 2003-506918 A (Scientific Generics Ltd.), 18 February, 2003 (18.02.03), Par. Nos. [0101], [0109] & WO 2001/010065 A1 & EP 1205045 A | 1-10 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 April, 2007 (12.04.07) | 24 April, 2007 (24.04.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2007/051278

C (Continuation).    DOCUMENTS CONSIDERED TO BE RELEVANT

| Category* | Citation of document, with indication, where appropriate, of the relevant passages | Relevant to claim No. |
|---|---|---|
| Y | Trading rate versus diversity in space-time-frequency block coding schemes Ouachani, I.; Gosse, K.; Duhamel, P.; Control, Communications and Signal Processing, 2004. First International Symposium on 2004 Page(s): 171 - 174 Digital Object Identifier 10.1109/ISCCSP.2004.1296245 | 1-10 |

Form PCT/ISA/210 (continuation of second sheet) (April 2005)

**EP 1 998 476 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0245286 A